(19) **Europäisches Patentamt / European Patent Office / Office européen des brevets**

(11) **EP 1 563 564 B1**

(12) **EUROPEAN PATENT SPECIFICATION**

(45) Date of publication and mention
of the grant of the patent:
**07.03.2007 Bulletin 2007/10**

(21) Application number: **03756725.2**

(22) Date of filing: **21.10.2003**

(51) Int Cl.:
**H01M 8/04** (2006.01)

(86) International application number:
**PCT/JP2003/013423**

(87) International publication number:
**WO 2004/045012 (27.05.2004 Gazette 2004/22)**

(54) **FUEL CELL SYSTEM**

BRENNSTOFFZELLENSYSTEM

SYSTEME DE PILE A COMBUSTIBLE

(84) Designated Contracting States:
**DE FR GB**

(30) Priority: **12.11.2002 JP 2002328269**

(43) Date of publication of application:
**17.08.2005 Bulletin 2005/33**

(73) Proprietor: **NISSAN MOTOR CO., LTD.**
**Yokohama-shi,**
**Kanagawa 221-0023 (JP)**

(72) Inventor: **YOKOI, Taro**
**Fujisawa-shi, Kanagawa 251-0033 (JP)**

(74) Representative: **Weber, Joachim et al**
**Hoefer & Partner**
**Patentanwälte,**
**Gabriel-Max-Strasse 29**
**81545 München (DE)**

(56) References cited:
**WO-A-02/056403        US-A- 4 537 839**
**US-B1- 6 413 661**

• **PATENT ABSTRACTS OF JAPAN vol. 0133, no. 71 (E-807), 17 August 1989 (1989-08-17) & JP 1 124962 A (FUJI ELECTRIC CO LTD), 17 May 1989 (1989-05-17)**

**Description**

TECHNICAL FIELD OF THE INVENTION

This invention relates to a fuel cell which recirculates hydrogen, and more particularly to the removal of impurities accumulated inside a recirculation path.

BACKGROUND OF THE INVENTION

A fuel cell system disclosed in JP2000-243417A, published by the Japan Patent Office in 2000, supplies hydrogen to the fuel cell by recirculation. As time passes, impurities which suppress the generation of electrical power accumulate in the gas flowing through the recirculation path, and hence, when the amount of impurities in the recirculated gas exceeds a predetermined amount, the impurities are discharged into the atmosphere with the recirculated gas.

SUMMARY OF THE INVENTION

However, hydrogen is contained in the gas which flows through the recirculation path, and it is undesirable that this hydrogen be discharged as is. Further, when hydrogen is produced by reforming materials such as methanol or gasoline, components of the material are contained in the hydrogen gas, albeit in minute quantities, and it is also undesirable that these components be discharged as is.

It has therefore been proposed that the gas inside the recirculation path be mixed with air and burned in a burner to produce steam or the like which is then discharged. It has also been proposed that the resultant combustion gas be passed through a heat exchanger and reused to raise the temperature of the heating medium in the fuel cell.

In this case, if the heating medium passes through the heat exchanger, the amount by which the temperature of the heating medium rises is comparatively low. If the heating medium does not happen to flow through the heat exchanger, however, the generated combustion heat is provided only to the small part of the heating medium that remains in the heat exchanger, and thus the temperature of the heating medium is raised only partially. If the heating medium boils, the pressure in the heating medium passage increases, causing breakdowns of the system or alteration of the heating medium caused by thermal decomposition.

It is therefore an object of this invention to prevent increases in the pressure of a heating medium passage and alteration of a heating medium caused by boiling of the heating medium when discharged recirculated gas is subjected to combustion processing.

In order to achieve the above object, the present invention provides a method of a operating a fuel cell system as disclosed in claim 1.

The details as well as other features and advantages of this invention are set forth in the remainder of the specification and are shown in the accompanying drawings.

BRIEF DESCRIPTION OF THE DRAWINGS

FIG. 1 is a constitutional diagram of a fuel cell system according to this invention.
FIG. 2 is a control block diagram of a controller.
FIG. 3 is a flowchart of determination control for executing a heating operation.
FIG. 4 is a flowchart of heating operation control.
FIG. 5 is similar to FIG. 1, but illustrates a second embodiment of this invention.
FIG. 6 is a control block diagram of a controller.
FIG. 7 is a flowchart of determination control for hydrogen purging.
FIG. 8 is a flowchart of hydrogen purging control.
FIG. 9 is similar to FIG. 1, but illustrates a third embodiment of this invention.
FIG. 10 is a control block diagram of a controller.
FIG. 11 is a flowchart of heating medium passage selection control.
FIG. 12 is a flowchart of hydrogen purging control.
FIG. 13 is similar to FIG. 2, but shows a control block diagram of a controller in a fourth embodiment of this invention.
FIG. 14 is a flowchart of hydrogen purging control.
FIG. 15 is similar to FIG. 1, but illustrates a fifth embodiment of this invention.
FIG. 16 is a flowchart of heating medium passage selection control.
FIG. 17 is a flowchart of hydrogen purging determination control in a sixth embodiment of this invention.

FIG. 18 is a flowchart of heating medium passage selection control.
FIG. 19 is a flowchart of hydrogen purging control.

DESCRIPTION OF THE PREFERRED EMBODIMENTS

First Embodiment

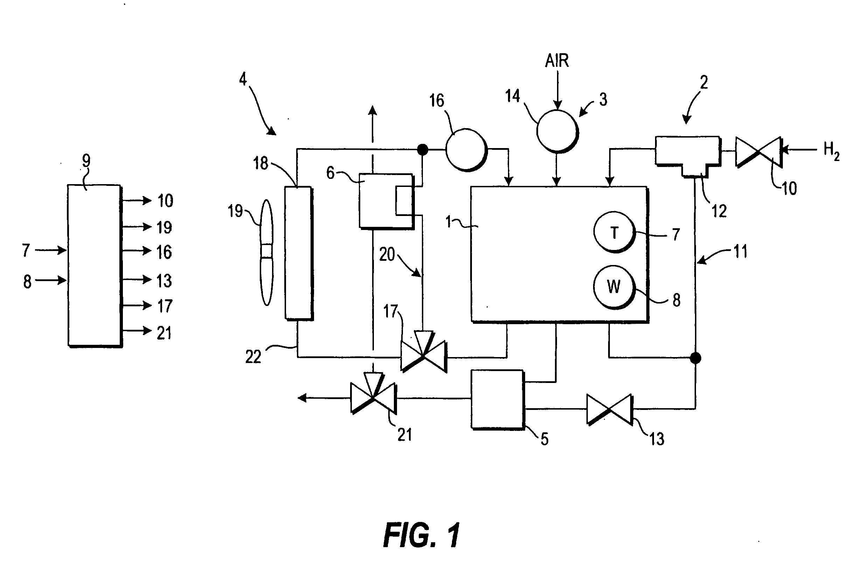

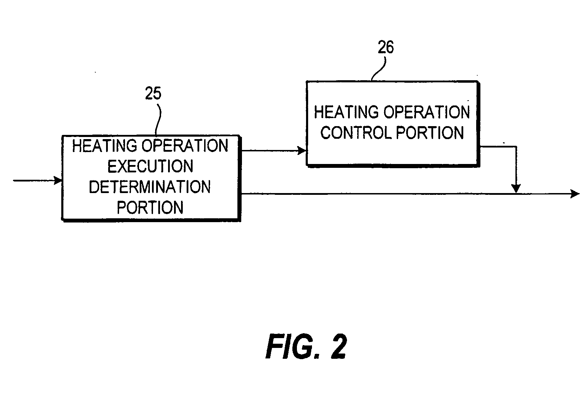

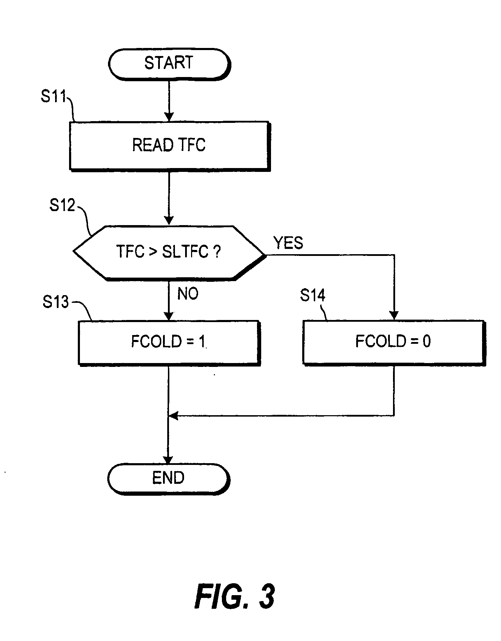

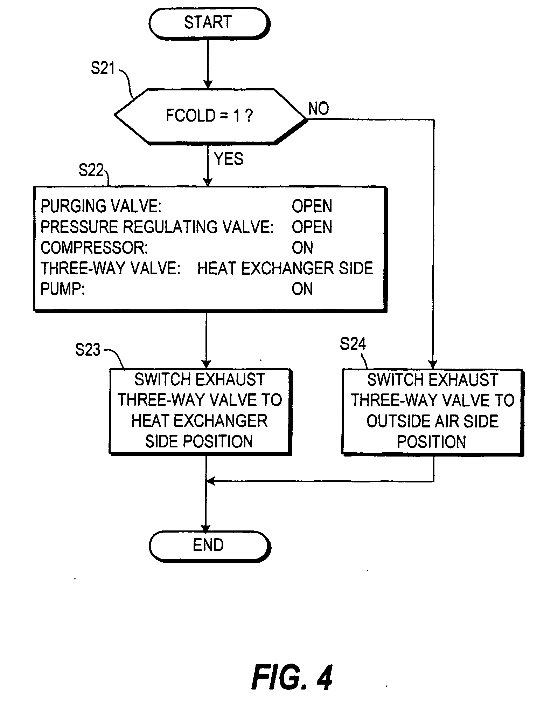

FIGs. 1 through 4 of the drawings show a fuel cell system to which this invention is applied. FIG. 1 is a system diagram, FIG. 2 is a control block diagram of a controller, FIG. 3 is a flowchart of determination control for executing a heating operation, and FIG. 4 is a flowchart of heating operation control.

As shown in FIG. 1, a fuel cell system comprises a fuel cell 1 which generates electrical power by receiving a supply of hydrogen and oxygen (air), a hydrogen supply system 2 which supplies hydrogen to the fuel cell 1 by recirculation, an oxidized gas supply system 3 which supplies air containing oxygen to the fuel cell 1, a heating medium supply system 4 which supplies a heating medium to the fuel cell 1, a burner 5 which burns discharged hydrogen containing impurities, which is discharged from the hydrogen supply system 2 during purging execution, together with discharged oxygen, and a heat exchanger 6 which performs heat exchange between the combustion gas of the burner 5 and the heating medium. A temperature sensor 7 which detects the temperature of the fuel cell 1 and a wattmeter 8 which detects the state of power generation of the fuel cell 1 are connected to the fuel cell 1, and the detection signals thereof are inputted into a controller 9.

The hydrogen supply system 2 reduces the pressure of hydrogen from a high-pressure storage tank not shown in the drawing to a preset pressure using a pressure regulating valve 10 and then supplies the hydrogen to the fuel electrode of the fuel cell 1. The discharged hydrogen which is discharged from the fuel electrode of the fuel cell 1 is returned to the ejector 2 through a recirculation passage 11, mixed with newly supplied hydrogen, and re-supplied to the fuel electrode of the fuel cell 1. The recirculation passage 11 leads to the burner 5 via a purging valve 13. When the purging valve 13 is opened, the gas in the recirculation passage 11 is supplied to the burner 5. The pressure regulating valve 10 and purging valve 13 are controlled by the controller 9.

The oxidized gas supply system 3 takes in outside air, compresses the air using a compressor 14 which is driven by an electric motor not shown in the drawing, and then transmits the air such that it is supplied to the oxidizer electrode of the fuel cell 1. The discharged air which is discharged from the oxidizer electrode is supplied to the burner 5.

The heating medium supply system 4 controls the temperature of the fuel cell 1 by causing a heating medium to flow through a heating medium passage of the fuel cell 1 not shown in the drawing. The heating medium supply system 4 is constituted by a pump 16 for pumping the heating medium, which is provided in series with the heating medium passage of the fuel cell 1, and a radiator 18 which cools the heating medium discharged from the fuel cell 1 via a three-way valve 17. A fan 19 is provided in the vicinity of the radiator 18. The rotation of the fan 19 is controlled by the controller 9, thereby controlling the amount of air transmitted to the radiator 18, and thus the cooling ability of the radiator 18 is adjusted.

The three-way valve 17 is disposed at a bifurcation point to a heat exchange passage 20 which circumvents the radiator 18. The three-way valve 17 is switched by the controller 9 to cause the heating medium discharged from the fuel cell 1 to flow either to the heat exchange passage 20 or to a heat exchanger bypass passage 22 on the radiator 18 side which bypasses the heat exchanger 6.

The heat exchanger 6 is provided at a point on the heat exchange passage 20. The heat exchanger 6 is capable of heating the heating medium passing through the interior by means of heat exchange with the combustion gas generated in the burner 5. The heat exchanger 6 is disposed on the heat exchange passage 20 through which the heating medium does not flow at all times rather than in the heating medium supply system 4 through which the heating medium is caused to flow at all times by the pump 16, and thus pressure loss caused by the heat exchanger 6 is suppressed and decreases in efficiency caused by increases in the work of the pump 16 are prevented.

The controller 9 is constituted by one, two, or more microprocessors, memory, and an input/output interface. The controller 9 switches the three-way valve 17 on the basis of the fuel cell temperature of the fuel cell 1 detected by the temperature sensor 7. When the fuel cell temperature is higher than a predetermined temperature, the three-way valve 17 is switched to the radiator 18 side (the heat exchanger bypass passage 22) such that the heating medium is led to the radiator 18 and cooled. The set temperature is determined appropriately from within a temperature range in which the fuel cell system can be operated with stability. When the fuel cell temperature is lower than the set temperature, the three-way valve 17 is switched to the heat exchange passage 20 such that the heating medium is led to the heat exchanger 6.

One of the heat exchange faces of the heat exchanger 6 is supplied with the heating medium, and the other heat exchange face is supplied with combustion gas from the burner 5 via an exhaust three-way valve 21, and by supplying the heat of the combustion gas to the heating medium, the heating medium is heated. As described above, the heating medium is supplied to the heat exchanger 6 when the fuel cell temperature is lower than the set temperature.

By increasing the temperature of the heating medium, the temperature of the fuel cell 1 is raised.

When the purging valve 13 is opened, the burner 5 burns recirculated gas discharged from the recirculation path 11 using discharged air from the oxidized gas supply system 3. The exhaust three-way valve 21 selects either to discharge the generated combustion gas outside or to supply the gas to the heat exchanger 6. The switching position of the exhaust three-way valve 21 is controlled by the controller 9, and is normally positioned in an outside air side position to discharge the combustion gas outside. When the three-way valve 17 of the heating medium supply system 4 is switched to the heat exchanger 6 side, the exhaust three-way valve 21 is switched to a heat exchanger 6 side position. By switching the exhaust three-way valve 21 to the heat exchanger 6 side position such that the combustion gas from the burner 5 is supplied to the heat exchanger 6, the heating medium is heated by the heat of the combustion gas.

FIG. 2 shows a control block diagram of the controller 9 which is executed at predetermined time intervals.

As shown in FIG. 2, the controller 9 first determines whether or not a heating operation is to be executed by means of a heating operation execution determination portion 25, and then, by means of a heating operation control portion 26, either executes a heating operation or continues normal operations according to the results of the determination by the determination portion 25.

FIG. 3 is a flowchart of the heating operation execution determination portion 25, and FIG. 4 is a flowchart of the heating operation control portion 26.

As shown in FIG. 3, first, in a step S11, the heating operation execution determination portion 25 reads a temperature $TFC$ of the fuel cell 1 detected by the temperature sensor 7.

In a step S12, a determination is made as to whether the fuel cell temperature $TFC$ is higher than a predetermined temperature $SLTFC$. If the fuel cell temperature $TFC$ is higher than the predetermined temperature $SLTFC$, the process advances to a step S14, and if not, the process advances to a step S13.

In the step S13, a heating operation flag $FCOLD$ is set to 1 (heating operation permitted) and the flow ends. In the step S14, the heating operation flag $FCOLD$ is set to 0 (heating operation not permitted) and processing ends.

As shown in FIG. 4, first, in a step S21, the heating operation control portion 26 determines whether the heating operation flag $FCOLD$ set by the heating operation execution determination portion 25 is at 1 or 0. If the flag $FCOLD$ is at 0, a heating operation is not permitted, and thus the process advances to a step S24. If the flag $FCOLD$ is at 1, then the process advances to a step S22.

In the step S24, the exhaust three-way valve 21 is set to the outside air side position and processing ends.

In the step S22, in order to perform a heating operation, the purging valve 13 is opened, the pressure regulating valve 10 is adjusted such that a sufficient amount of hydrogen is supplied to generate the amount of heat required for warm-up in the burner 5, and the compressor 14 is continuously operated to supply air to the burner 5. Thus the burner 5 is supplied with a sufficient amount of air and hydrogen to generate the amount of heat required for warm-up, and hence generates high-temperature combustion gas. The three-way valve 17 of the heating medium supply system 4 is switched to the heat exchanger 6 side, and the pump 16 is operated. The heating medium flows through the pump 16, the fuel cell 1, the three-way valve 17, the heat exchange passage 20, and the heat exchanger 6. Following this processing, the process advances to a step S23.

In the step S23, the exhaust three-way valve 21 is switched to the heat exchanger 6 side position and processing ends. In so doing, the high-temperature combustion gas generated in the burner 5 passes through the heat exchanger 6. The heat of the combustion gas is transmitted to the heating medium by heat exchange, and the increased-temperature heating medium is led to the fuel cell 1. As a result, the temperature of the fuel cell 1 rises rapidly to reach a temperature at which efficient running is possible in a short time period.

According to the processing described above, combustion gas is led to the heat exchanger 6 only when a heating operation is performed, and at other times the combustion gas is discharged into the atmosphere without passing through the heat exchanger 6. Hence during operations other than a heating operation, and in particular during purging execution, the heat of the combustion gas is prevented from being transmitted to the heating medium. As a result, excessive heating and boiling of the heating medium, damage caused by increased pressure in the heating medium passage, and alteration of the heating medium can be suppressed.

The following effect is obtained in this embodiment.

(i) During a cold start-up operation, the heat of the high-temperature combustion gas generated in the burner 5 is supplied to the heating medium through the heat exchanger 6 such that the heating medium is heated and the fuel cell 1 is warmed. During hydrogen purging execution, the high-temperature combustion gas generated by the burner 5 is discharged through the exhaust three-way valve 21 (heat exchanger bypass mechanism) and does not pass through the heat exchanger 6.

Hence the heat generated during hydrogen purging is discharged into the atmosphere without being supplied to the heat exchanger 6, and thus no part of the heating medium is heated excessively even when the flow of the heating medium into the heat exchanger 6 is halted. As a result, boiling of the heating medium, increased pressure in the heating medium passage, and alteration of the heating medium can be avoided.

<u>Second Embodiment</u>

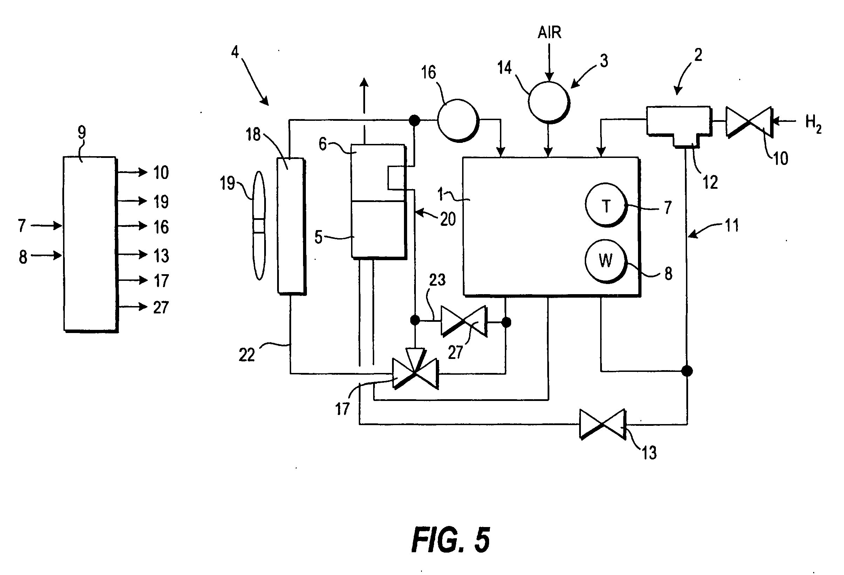

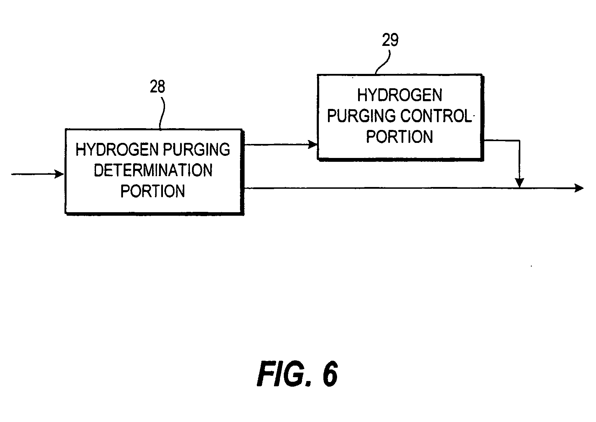

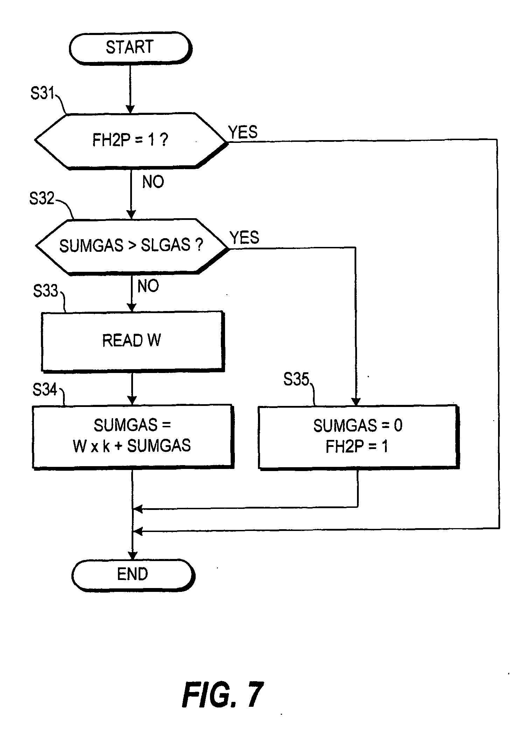

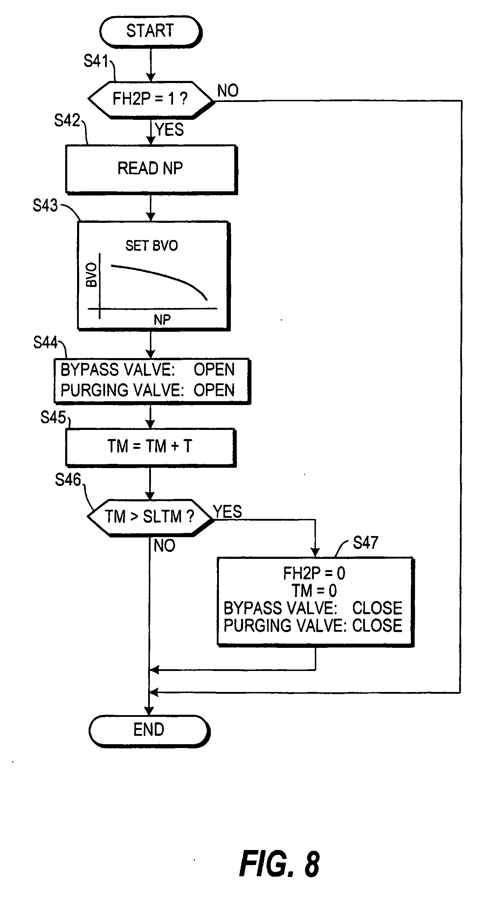

FIGs. 5 through 8 illustrate a second embodiment of this invention. FIG. 5 is a system diagram, FIG. 6 is a control block diagram, FIG. 7 is a flowchart of hydrogen purging determination control, and FIG. 8 is a flowchart of hydrogen purging control.

In the second embodiment, a part of the heating medium is recirculated to the heat exchanger at all times. The exhaust three-way valve downstream of the burner 5 is removed and all of the combustion gas from the burner is supplied to the heat exchanger. Identical devices to the first embodiment have been allocated identical reference symbols, and description thereof has been omitted or simplified.

As shown in FIG. 5, a location between the heat exchanger 6 and three-way valve 17 on the heat exchange passage 20 of the heating medium supply system 4 is connected to the vicinity of the heating medium outlet of the fuel cell 1 by a passage 23, and a bypass valve 27, the opening of which is adjusted by the controller 9, is provided on the passage 23.

A portion of the heating medium discharged from the fuel cell 1 flows into the heat exchange passage 20 in accordance with the opening of the bypass valve 27, passes through the heat exchanger 6, is aspirated by the pump 16, and then flows to the fuel cell 1. Although not shown in the drawing, a similar operation can be performed without providing the bypass valve 27 by manipulating the three-way valve 17 such that the heating medium flows into the heat exchange passage 20.

The burner 5 is directly coupled to the heat exchanger 6, and when the burner 5 burns recirculated gas, all of the resultant combustion gas is supplied to the heat exchanger 6.

During cold start-up, similarly to the first embodiment, the discharged air and the discharged hydrogen supplied through the purging valve 13 are burned by the burner 5, whereupon the high-temperature combustion gas is supplied to the heat exchanger 6. The three-way valve 17 is opened to the heat exchanger 6 side and all of the heating medium from the outlet of the fuel cell 1. is supplied to the heat exchanger 6 through the three-way valve 17. Hence during a cold start-up operation, the fuel cell 1 can be warmed up by supplying the heat of the combustion gas to the heating medium such that the heating medium is heated.

Impurities accumulate in the recirculation path of the hydrogen supply system 2 which supplies hydrogen to the fuel cell 1, and thus the control described below is performed.

FIG. 6 is a control block diagram of the controller 9 which is executed at predetermined time intervals. The controller 9 first determines whether hydrogen purging is to be executed according to a hydrogen purging determination portion 28, and then, by means of a hydrogen purging control portion 29, either executes a hydrogen purging operation or continues normal operations without executing hydrogen purging according to the determination results of the determination portion 28.

FIG. 7 is a flowchart of the hydrogen purging determination portion 28, and FIG. 8 is a flowchart of the hydrogen purging control portion 29.

As shown in FIG. 7, first, in a step S31, the hydrogen purging determination portion 28 determines whether a hydrogen purging permission flag *FH2P* is at 1 (hydrogen purging permitted) or 0 (hydrogen purging not permitted). If the hydrogen purging permission flag *FH2P* is at 1, then hydrogen purging is already being executed, and since there is no need to determine that hydrogen purging is being executed, processing ends without any further steps. If the hydrogen purging permission flag *FH2P* is at 0, then the process advances to a step S32.

In the step S32, a determination is made as to whether or not an impurity accumulation index *SUMGAS,* which is the amount of impurities contained in the recirculated gas in the recirculation path measured as a numerical value, exceeds a predetermined value *SLGAS.* If the impurity accumulation index *SUMGAS* exceeds the predetermined value *SLGAS,* the process advances to a step S35, and if the impurity accumulation index *SUMGAS* is below the predetermined value *SLGAS,* it is determined that hydrogen purging is as yet unnecessary and the process advances to a step S33.

In the step S35, the impurity accumulation index *SUMGAS* is set at zero, the hydrogen purging permission flag *FH2P* is set at 1, whereby permission is given for a hydrogen purging operation, and processing ends.

In the step S33, a power generation amount *W* of the fuel cell 1 is read, and the process advances to a step S34.

In the step S34, the impurity accumulation index *SUMGAS* is calculated according to the following equation:

$$SUMGAS = W \times K + SUMGAS$$

whereupon processing ends. Here, if the current processing is performed once per second, for example, *K* is set to *K* = 1, and if processing is performed irregularly, *K* is set to a numerical value commensurate with the time from implementation of the previous processing to the current processing. By setting *K* in this manner, the impurity accumulation index *SUMGAS* takes a value that is largely commensurate with an integrated value of the extracted power. The value of the impurity accumulation index *SUMGAS* is different to the actual amount of impurities, but since impurities in the hydrogen electrode are also largely proportionate to the amount of extracted power, similarly to *SUMGAS,* purging timing can be determined accurately by determining hydrogen purging timing according to the size of the impurity accumulation index *SUMGAS.*

The timing for executing hydrogen purging is not limited to the timing described in this embodiment, and as disclosed in JP2000-243417A, published by the Japan Patent Office in 2000, hydrogen purging may be executed at fixed operating time intervals, or when the output voltage of the fuel cell falls below a predetermined value, or when the hydrogen concentration falls below a predetermined concentration.

As shown in FIG. 8, first, in a step S41, the hydrogen purging control portion 29 determines whether the hydrogen purging permission flag *FH2P* is at 1 (hydrogen purging permitted) or not. If the hydrogen purging permission flag *FH2P* is at 1, the process advances to a step S42, and if hydrogen purging is not permitted, processing ends with no further steps.

In the step S42, a rotation speed NP of the pump 16 is read. In a step S43, an opening *BVO* of the bypass valve 27 which corresponds to the rotation speed NP of the pump 16 is set by referring to a pump rotation speed-opening table. In a step S44, the opening of the bypass valve 27 is adjusted to the opening *BVO,* the purging valve 13 is opened, and purging begins.

In a step S45, a timer *TM* is increased by a predetermined amount *T.* Similarly to *K* in the step S34 of FIG. 7, the predetermined amount *T* may by a fixed value if the current processing is performed at fixed time intervals, but if the processing is irregular, then T is set to a value that is commensurate with the elapsed time from implementation of the previous processing to the present time. In so doing, the time at which purging is executed can be counted up accurately.

In the step S46, a determination is made as to whether or not the timer *TM* has exceeded a predetermined value *SLTM,* and if not, processing ends with no further steps so as to continue purging. If the timer *TM* has exceeded the predetermined value *SLTM,* the process advances to a step S47, where, in order to end hydrogen purging, the bypass valve 27 and purging valve 13 are closed and the hydrogen purging permission flag *FH2P* is set to zero. The timer *TM* is also set to zero for a subsequent measurement, and thus processing ends. The predetermined value *SLTM* is set to a value at which a sufficient hydrogen purging effect can be expected and wasteful hydrogen discharge is minimized. This is set on the basis of experiment results.

According to the processing described above, when hydrogen is purged, a predetermined amount of heating medium (based on the pump rotation speed-opening table in the step S43) is caused to flow to the heat exchanger 6 at all times, even when the three-way valve 17 is set to the radiator 18 side, or in other words the heat exchanger bypass passage 22 side, and thus excessive heat is prevented from being applied to one part of the heating medium. As a result, boiling of the heating medium, increased pressure in the heating medium passage, and alteration caused by thermal decomposition of the heating medium can be avoided.

When the three-way valve 17 is set to the heat exchanger 6 side, control of the bypass valve 27 is unnecessary, but there is no particular problem if this control is executed, and here no differentiation is made therebetween in order to simplify control. Of course the cases may be differentiated such that control of the bypass valve 27 is not performed when the three-way valve 17 is set to the heat exchanger 6 side.

Also in the second embodiment, the passage 23 and bypass valve 27 are added, but if the three-way valve 17 is provided with an opening adjustment function such that during hydrogen purging a predetermined amount of the heating medium is caused to flow to the heat exchanger 6 side, similar effects may be obtained without providing the passage 23 and bypass valve 27.

The following effect is obtained in this embodiment.

(ii) Gas inside the hydrogen supply system 2 is discharged to the burner 5 through the purging valve 13, whereby high-temperature combustion gas is generated by the burner 5. During a cold start-up operation, the heat of the combustion gas is provided to the heating medium by the heat exchanger 6 such that the heating medium is heated, and thus the fuel cell 1 can be warmed up.

Even when the heating medium passage is set to the heat exchanger bypass passage 22 side by the three-way valve 17, a predetermined amount of the heating medium is caused to flow to the heat exchanger 6 side, and hence even during normal operations when warming-up is complete, a predetermined amount of the heating medium flows to the heat exchanger 6 while the burner 5 is operative. As a result, boiling of the heating medium, increased pressure in the heating medium passage, and alteration of the heating medium can be avoided.

Third Embodiment

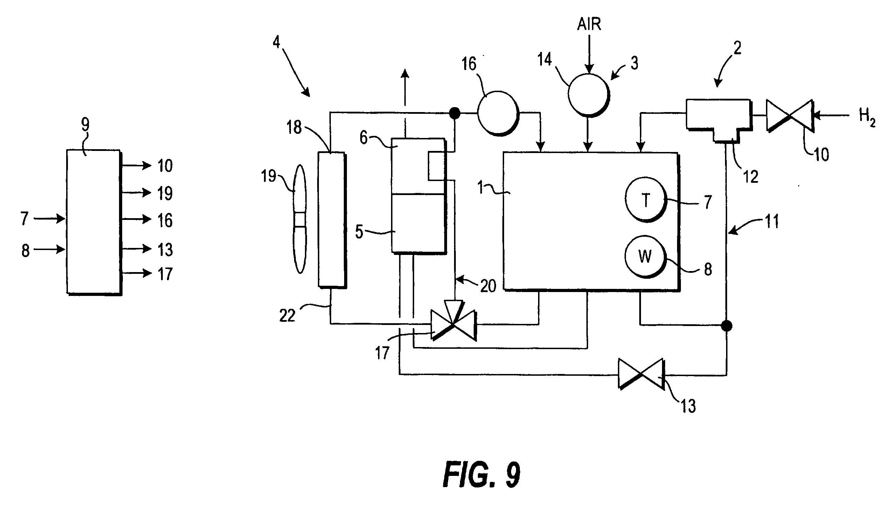

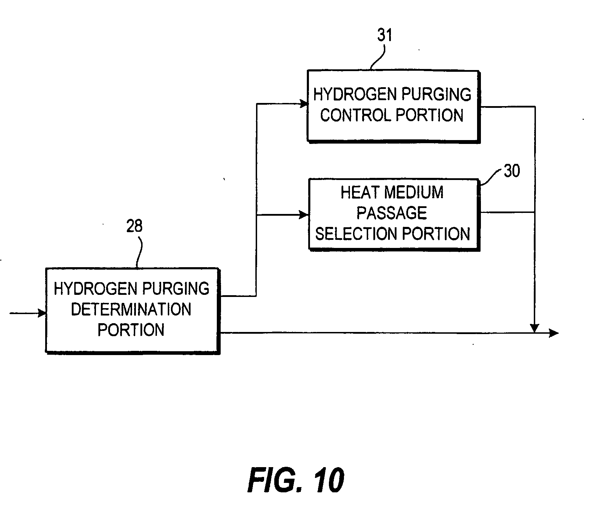

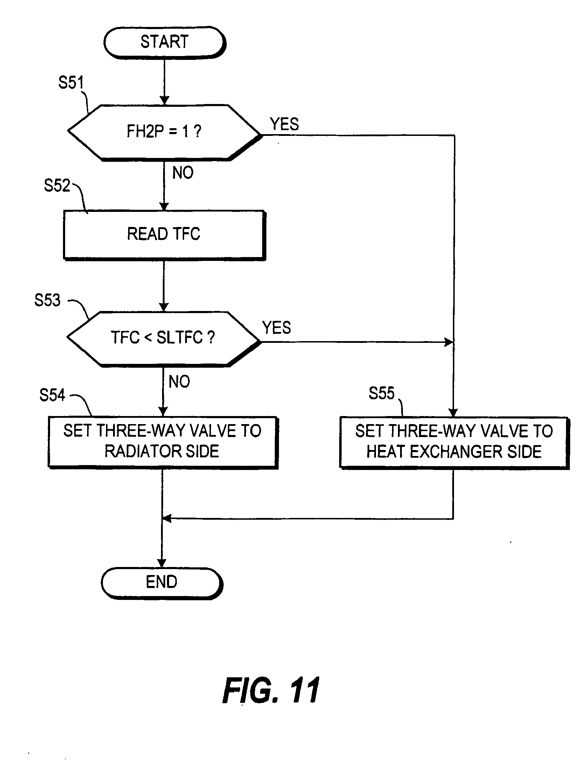

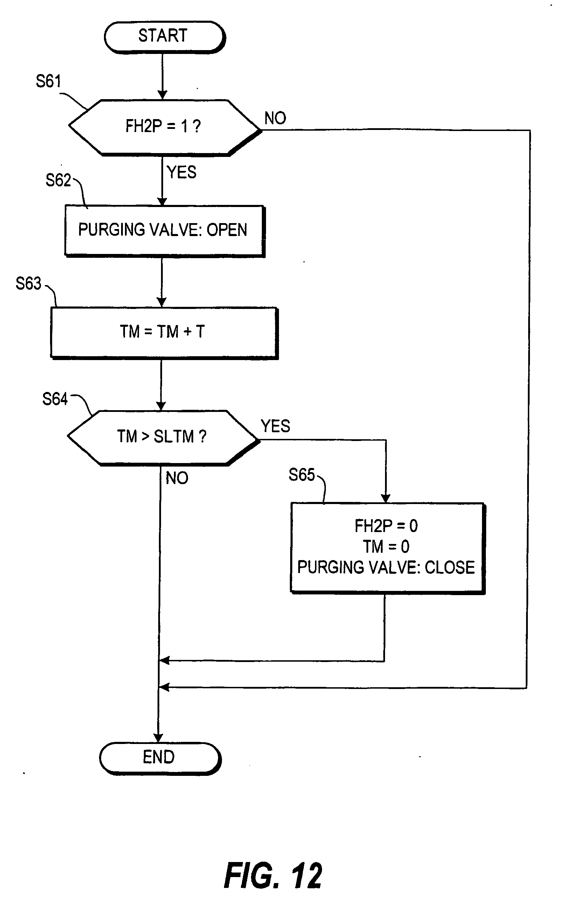

FIGs. 9 through 12 illustrate a third embodiment of this invention. FIG. 9 is a system diagram, FIG. 10 is a control block diagram, FIG. 11 is a flowchart of heating medium passage selection control, and FIG. 12 is a flowchart of hydrogen purging control.

In the third embodiment, hydrogen purging is executed after the three-way valve has been switched such that the heating medium flows into the heat exchanger. Identical devices to those in FIGs. 1 through 8 have been allocated identical reference symbols, and description thereof has been omitted or simplified.

As shown in FIG. 9, in the fuel cell system of the third embodiment, the passage 23 and bypass valve 27 of the fuel cell system shown in FIG. 5 have been removed. Prior to the execution of hydrogen purging, the controller 9 switches the three-way valve 17 to the heat exchanger 6 side.

FIG. 10 is a control block diagram of the controller 9 which is executed at predetermined time intervals.

First, the controller 9 determines whether or not hydrogen purging is to be executed by means of the hydrogen purging determination portion 28. When permission is given for hydrogen purging to be executed, the heating medium is caused to flow to the heat exchanger 6 side by a heating medium passage selection portion 30, and then hydrogen purging control is executed by a hydrogen purging control portion 31. The hydrogen purging determination portion 28 is identical to that shown in FIG. 7 of the second embodiment, and hence description thereof has been omitted.

FIG. 11 is a flowchart of the heating medium passage selection portion 30. FIG. 12 is a flowchart of the hydrogen purging control portion 31.

As shown in FIG. 11, first, in a step S51, the heating medium passage selection portion 30 determines whether the hydrogen purging permission flag $FH2P$ is at 1 (hydrogen purging permitted) or not. If hydrogen purging is not permitted, the process advances to a step S52, and if purging is permitted, the process advances to a step S55.

In the step S52, the temperature $TFC$ of the fuel cell 1 detected by the temperature sensor 7 is read. In a step S53, a determination is made as to whether or not the fuel cell temperature $TFC$ is lower than the predetermined temperature $SLTFC$. If the temperature $TFC$ is higher than the set temperature $SLTFC$, the process advances to a step S54, where the three-way valve 17 is set to the radiator 18 side in order to cool the heating medium, and thus processing ends. If, on the other hand, the temperature $TFC$ is lower than the set temperature $SLTFC$, the process advances to the step S55.

In the step S55, the three-way valve 17 is set to the heat exchanger 6 side such that the heating medium flows into the heat exchanger 6, and thus processing ends. By means of this control, the heating medium invariably flows into the heat exchanger 6 during hydrogen purging.

As shown in FIG. 12, first, in a step S61, the hydrogen purging control portion 31 determines whether the hydrogen purging permission flag $FH2P$ is at 1 (hydrogen purging permitted) or not. If hydrogen purging is not permitted, processing ends, and if purging is permitted, the process advances to a step S62.

In the step S62, the purging valve 13 is opened and hydrogen purging begins. In a step S63, the timer $TM$ is increased by the predetermined amount $T$.

Similarly to $K$ in the step S34 of FIG. 7, the predetermined amount $T$ may by a fixed value if the current processing is performed at fixed time intervals, but if the processing is irregular, then T is set to a value that is commensurate with the elapsed time from implementation of the previous processing to the present time. In so doing, the time during which purging is executed can be counted up accurately.

In the step S64, a determination is made as to whether or not the timer $TM$ has exceeded a predetermined value $SLTM$. If not, processing ends with no further steps so as to continue purging, and if so, the process advances to a step S65, where, in order to end hydrogen purging, the purging valve 13 is closed and the hydrogen purging permission flag $FH2P$ is set to zero. The timer $TM$ is also set to zero for a subsequent measurement, and thus processing ends. The predetermined value $SLTM$ is set to a value at which a sufficient hydrogen purging effect can be expected and wasteful hydrogen discharge is minimized. This is set on the basis of experiment results.

By implementing the processing described above, when the heating medium passage is set to the radiator 18 side (the heat exchanger bypass passage 22 side), hydrogen purging is performed after the passage is altered to the heat exchanger 6 side, and thus no part of the heating medium remains inside the heat exchanger 6. As a result, boiling of the heating medium, increased pressure in the heating medium passage, and alteration of the heating medium due to thermal decomposition, which are caused by only one part of the heating medium being heated, can be avoided.

Further, the burner 5 for raising the temperature of the fuel cell 1 during low-temperature start-up and the burner 5 for burning the hydrogen discharged during purging may be integrated.

The following effect is obtained in this embodiment.

(iii) Gas inside the hydrogen supply system 2 which supplies hydrogen to the fuel cell 1 flows into the burner 5 through the hydrogen purging valve 13 and is caused to react with oxygen in the burner 5 to generate high-temperature combustion gas. Hence during a cold start-up operation, the heat of the combustion gas is provided to the heating medium by the heat exchanger 6 such that the heating medium is heated, and thus the fuel cell system can be warmed.

When the three-way valve 17 is provided to switch the heating medium passage to the heat exchanger 6 side or the heat exchanger bypass passage 22 (radiator 18) side, and if the heating medium is flowing to the heat exchanger bypass passage 22 side when hydrogen purging is requested, hydrogen purging is performed after the heating medium passage has been switched to the heat exchanger 6 side. Thus the heat that is generated during hydrogen purging is absorbed by the heating medium via the heat exchanger 6. There is no need to provide an exhaust three-way valve between the burner 5 and heat exchanger 6, and moreover, boiling of the heating medium, increased pressure in the heating medium passage, and alteration of the heating medium can be avoided without increasing the work of the pump 16.

Fourth Embodiment

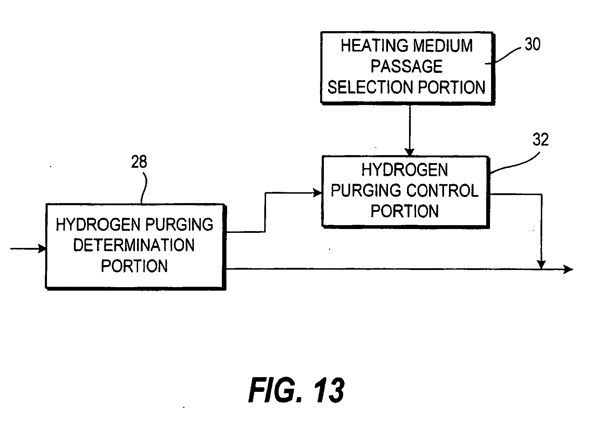

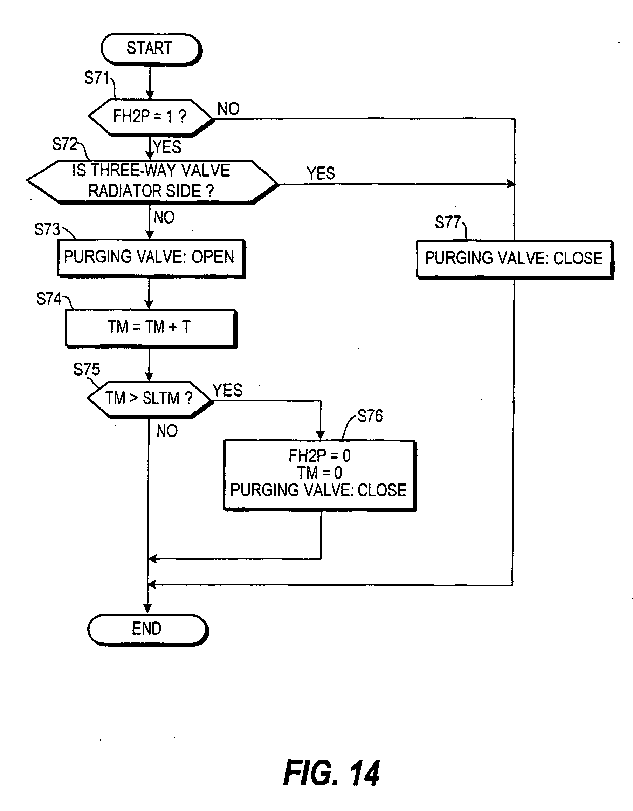

FIGs. 13 and 14 illustrate a fourth embodiment of this invention. FIG. 13 is a control block diagram, and FIG. 14 is a flowchart of hydrogen purging control. The system constitution is identical to the constitution of the third embodiment shown in FIG. 9. If the heating medium is flowing to the radiator side when hydrogen purging is requested, purging is prohibited until the heating medium flows to the heat exchanger side. Identical devices to those in FIGs. 1 through 12 have been allocated identical reference symbols, and description thereof has been omitted or simplified.

FIG. 13 is a control block diagram of the controller 9 which is executed at predetermined time intervals.

First, the controller 9 determines whether or not hydrogen purging is to be executed by means of the hydrogen purging determination portion 28. If hydrogen purging is permitted, the heating medium is caused to flow to the heat exchanger 6 side by the heating medium passage selection portion 30. Hydrogen purging control is then executed by a hydrogen purging control portion 32. The hydrogen purging control portion 32 alters the timing of hydrogen purging execution according to an instruction from the heating medium passage selection portion 30. The hydrogen purging determination portion 28 is identical to that in FIG. 7 of the second embodiment and the heating medium passage selection portion 30 is identical to that shown in FIG. 11 of the third embodiment, and hence descriptions thereof have been omitted.

FIG. 14 is a flowchart of the hydrogen purging control portion 32.

First, in a step S71, the hydrogen purging control portion 32 determines whether the hydrogen purging permission flag *FH2P* is at 1 (hydrogen purging permitted) or not If hydrogen purging is not permitted, the process advances to a step S77, and if purging is permitted, the process advances to a step S72.

In the step S72, the direction in which the three-way valve 17 is opened is referenced. If the three-way valve 17 is opened to the radiator 18 side, or in other words to the heat exchanger bypass passage 22 side, the process advances to the step S77, and if the three-way valve 17 is opened to the heat exchanger 6 side, the process advances to a step S73.

In the step S73, the purging valve 13 is opened and hydrogen purging begins. Purging is executed in steps S74 through S76. The processing of the steps S74 through S76 is identical to that of the steps S63 through S65 in FIG. 12 of the third embodiment, and hence description thereof has been omitted.

In the step S77, the purging valve 13 is closed, purging execution is prohibited, and processing ends.

According to the processing described above, when the three-way valve 17 is opened to the radiator 18 side such that the heating medium does not flow into the heat exchanger 6, the process moves from the step S72 to the step S77, where the purging valve 13 is closed. Thus boiling of the heating medium, increased pressure in the heating medium passage, and alteration of the heating medium due to thermal decomposition can be avoided.

Further, if the heating medium passage switches to the radiator 18 side (heat exchanger bypass passage 22 side) during purging, purging is prohibited at that point. However, the value of the timer *TM* maintains its value without being reset until purging is complete. Hence when purging is restarted, the timer *TM* starts from the value at which purging was prohibited such that purging is only executed for the required period of time.

In this embodiment, the following effect is obtained in addition to the effect (iii) in the third embodiment.

(iv) If the heating medium is flowing to the heat exchanger bypass passage 22 side (radiator 18 side) when hydrogen purging is requested, purging is prohibited until the heating medium flows to the heat exchanger 6 side, and thus boiling of the heating medium, increased pressure in the heating medium passage, and alteration of the heating medium can be avoided.

Fifth Embodiment

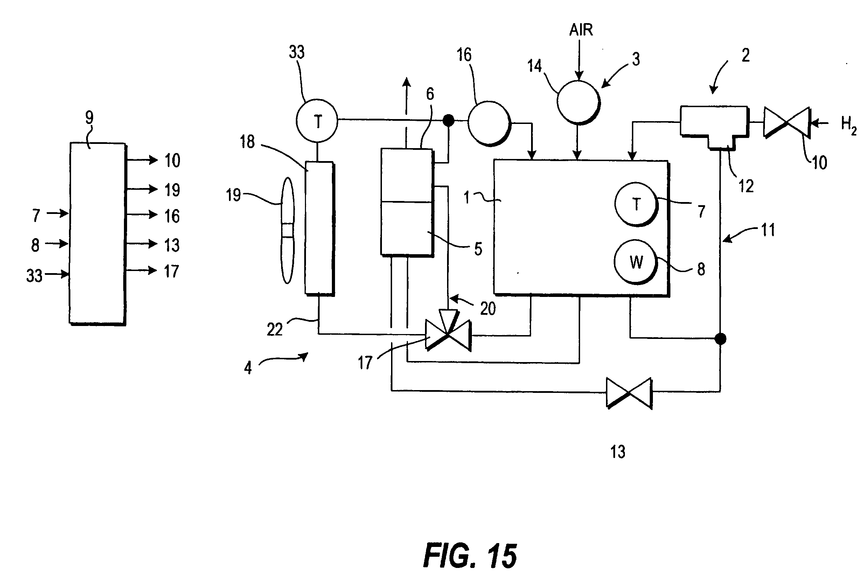

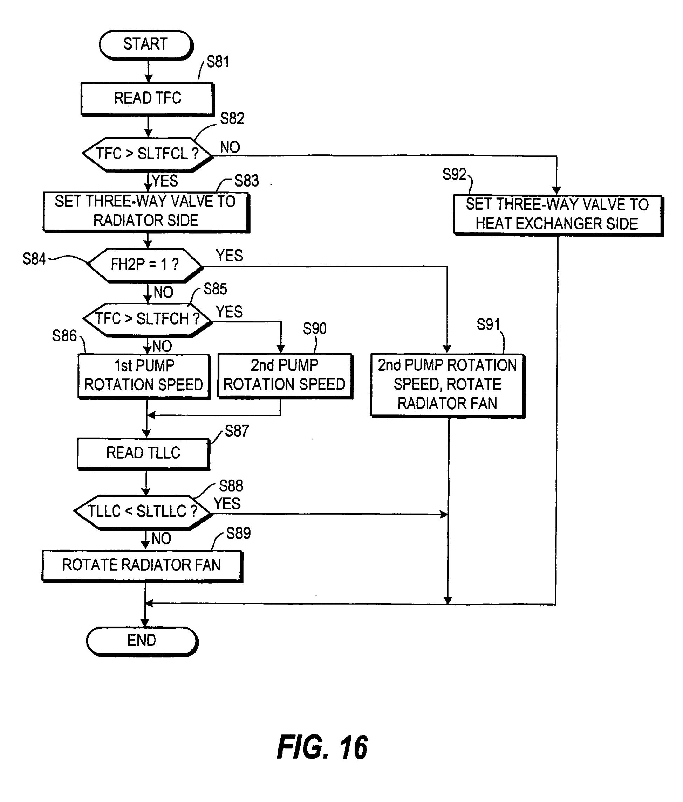

FIGs. 15 and 16 illustrate a fifth embodiment of this invention. FIG. 15 is a system diagram and FIG. 16 is a flowchart of heating medium passage selection control.

In the fifth embodiment, the cooling ability of the radiator is increased such that the temperature of the heating medium can be cooled more quickly than usual. If the heating medium is flowing to the radiator side when hydrogen purging is requested, the cooling ability of the radiator is raised such that the heating medium is cooled rapidly, whereupon the heating medium is caused to flow to the heat exchanger side and hydrogen purging is performed. It should be noted that identical devices to those in FIGs. 1 through 14 have been allocated identical reference symbols, and description thereof has been omitted or simplified.

As shown in FIG. 15, the system constitution is almost identical to the constitution of the third embodiment shown in FIG. 9, but differs therefrom in that a heating medium thermometer 33 for measuring the temperature of the heating medium is provided at the outlet of the radiator 18 and temperature signals from the heating medium thermometer 33 are inputted into the controller 9.

The control block diagram of the controller 9 is identical to that of the fourth embodiment shown in FIG. 13. First, a determination is made as to whether or not hydrogen purging is to be executed by means of the hydrogen purging determination portion 28, and if hydrogen purging is permitted, the heating medium is caused to flow to the heat exchanger 6 side by the heating medium passage selection portion 30. Hydrogen purging control is then executed by the hydrogen purging control portion 32. The hydrogen purging control portion 32 alters the timing of hydrogen purging execution according to an instruction from the heating medium passage selection portion 30.

The hydrogen purging determination portion 28 is identical to that of the second embodiment shown in FIG. 7 and the hydrogen purging control portion 32 is identical to that of the fourth embodiment shown in FIG. 14. Hence descriptions thereof have been omitted.

FIG. 16 is a flowchart of the heating medium passage selection portion 30.

First, in a step 581, the heating medium passage selection portion 30 reads the fuel cell temperature $TFC,$ and in a step S82, determines whether or not the fuel cell temperature $TFC$ is higher than a low set temperature $SLTFCL.$ If not, the process advances to a step S92, and if so, the process advances to a step S83.

In the step S92, the three-way valve 17 is switched to the heat exchanger 6 side and processing ends without cooling the fuel cell 1.

In the step S83, the three-way valve 17 is switched to the radiator 18 (heat exchanger bypass passage 22) side to prepare for cooling the fuel cell 1.

In a step S84, a determination is made as to whether the hydrogen purging permission flag $FH2P$ is at 1 (hydrogen purging permitted) or not. If hydrogen purging is permitted, the process advances to a step S91. In the step S91, the rotation speed of the pump 16 is set to a second predetermined rotation speed that is higher than a first predetermined rotation speed (the pump rotation speed during normal operations), and the fan 19 is caused to rotate. Thus a large amount of the cooled heating medium that has been cooled by the radiator 18 is transmitted to the fuel cell 1 such that the fuel cell 1 can be cooled rapidly.

If hydrogen purging is not permitted in the step S84, normal control is performed without performing the rapid cooling operation described above. More specifically, the process advances to a step S85, where a determination is made as to whether or not the temperature $TFC$ of the fuel cell 1 is higher than a high set temperature $SLTFCH$ which is higher than the low set temperature $SLTFCL.$ If the temperature $TFC$ is higher than the high set temperature $SLTFCH,$ the rotation speed of the pump 16 is set to a second predetermined rotation speed which is higher than a first predetermined rotation speed in a step S90. If the temperature $TFC$ is lower than the high set temperature $SLTFCH,$ the rotation speed of the pump 16 is set to the first predetermined rotation speed in a step S86.

In a step S87, a heating medium temperature $TLLC$ detected by the temperature sensor 33 is read. In a step S88, a determination is made as to whether the heating medium temperature $TLLC$ is lower than a heating medium predetermined temperature $SLTLLC.$ If so, the current processing ends with no further steps, and if not, the fan 19 is caused to rotate in a step S89.

By means of the processing described above, when the temperature of the fuel cell 1 is high and the three-way valve 17 is opened to the radiator 18 side, hydrogen purging is implemented after the fuel cell 1 is cooled rapidly such that the temperature of the fuel cell 1 drops sufficiently and the three-way valve 17 is switched to the heat exchanger 6 side. As a result, boiling of the heating medium, increased pressure in the heating medium passage, and alteration of the heating medium due to thermal decomposition can be avoided. Excessive increases in the temperature of the fuel cell 1 can also be avoided, and the time during which hydrogen purging is prohibited can be shortened.

In this embodiment, the following effects are obtained in addition to the effect (iii) in the third embodiment and the effect (iv) in the fourth embodiment.

(v) The radiator 18 which cools the heating medium and the fan 19 which increases the cooling ability of the radiator 18 such that the heating medium is cooled more quickly than usual are provided on the heat exchanger bypass passage 22 (radiator 18) side. If the heating medium is flowing on the radiator 18 side when hydrogen purging is requested, first the heating medium is cooled rapidly below a predetermined temperature by the fan 19, then the heating medium passage is switched to the heat exchanger 6 side, and then hydrogen purging is executed. Thus the temperature of the fuel cell 1 is held at an optimum level and hydrogen purging is performed at an appropriate timing, and as a result, boiling of the heating medium, increased pressure in the heating medium passage, and alteration of the heating medium can be avoided.

(vi) By using the pump 16 which increases the flow of heating medium through the radiator 18 as a mechanism for adjusting the cooling ability of the radiator 18, the cooling ability of the radiator 18 can be adjusted without adding any special devices.

(vii) By using the fan 19 which increases the flow of air through the radiator 18 as a mechanism for adjusting the cooling ability of the radiator 18, the fuel cell can be cooled efficiently.

Sixth Embodiment

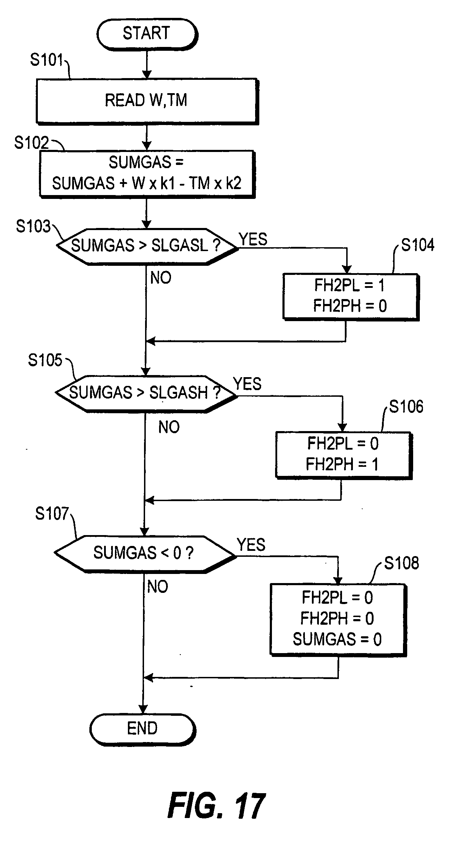

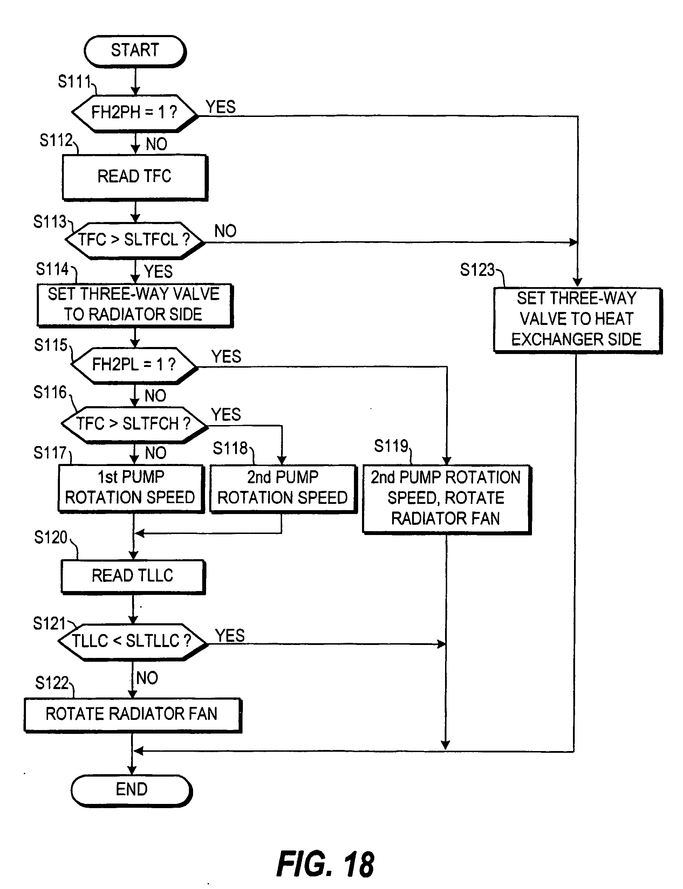

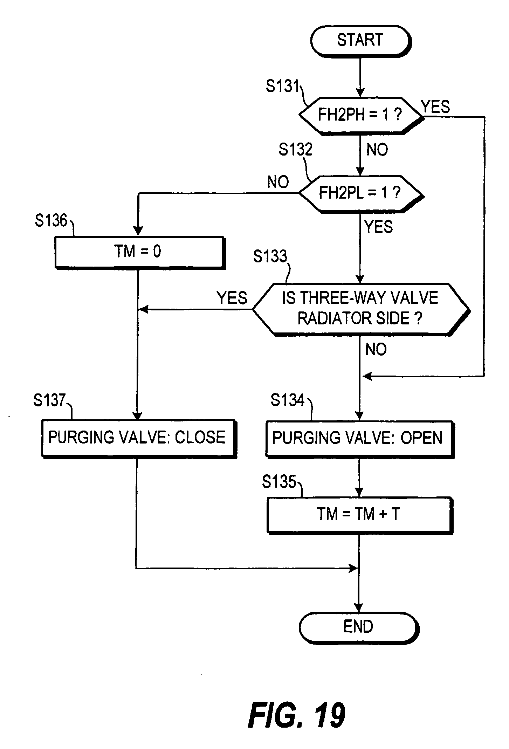

FIGs. 17 through 19 illustrate a sixth embodiment of this invention. FIG. 17 is a flowchart of hydrogen purging determination control, FIG. 18 is a flowchart of heating medium passage selection control, and FIG. 19 is a flowchart of hydrogen purging control.

In the sixth embodiment, if the heating medium is flowing on the radiator side when hydrogen purging is requested, a selection is made according to the urgency of purging to either execute hydrogen purging after switching the heating medium passage to the heat exchanger side, or to prohibit purging. Identical devices to those in FIGs. 1 through 16 have been allocated identical reference symbols, and description thereof has been omitted or simplified. The system constitution is identical to that of the fifth embodiment shown in FIG. 15.

A control block diagram of the controller 9 has been omitted, but would be similar to that of the fourth embodiment shown in FIG. 13. First, a determination is made as to whether hydrogen purging is to be executed by means of the hydrogen purging determination portion 28, and if hydrogen purging is permitted, the heating medium is caused to flow to the heat exchanger 6 side by the heating medium passage selection portion 30. Hydrogen purging control is then executed by the hydrogen purging control portion 32.

FIG. 17 is a flowchart of the hydrogen purging determination portion 28, FIG. 18 is a flowchart of the heating medium passage selection portion 30, and FIG. 19 is a flowchart of the hydrogen purging control portion 32.

As shown in FIG. 17, first, in a step S101, the hydrogen purging determination portion 28 reads the current amount of power detected by the wattmeter 8 and a hydrogen purging duration $TM$ which is counted by the hydrogen purging control portion 32, as will be described below.

In a step S102, the impurity accumulation index $SUMGAS$ is calculated according to the following equation:

$$SUMGAS = SUMGAS + W \times K1 - TM \times K2$$

The index $SUMGAS$ is the amount of impurities in the recirculated gas, which increases when the fuel cell 1 is driven and decreases when hydrogen purging is executed, measured as a numerical value. Here, $K1$, $K2$, and so on are adjusted and set to appropriate values by means of experiment or the like.

In a step S103, a determination is made as to whether or not the index $SUMGAS$ is larger than a first predetermined value $SLGASL$. If so, the process advances to a step S104, where a first purging permission flag $FH2PL$ is set at 1 and a second purging permission flag $FH2PH$ is set at O.

In a step S105, a determination is made as to whether or not the index $SUMGAS$ is larger than a second predetermined value $SLGASH$ which is larger than the first predetermined value $SLGASL$. If the index $SUMGAS$ is larger than the second predetermined value $SLGASH$, the process advances to a step S106, where the second purging permission flag $FH2PH$ is set at 1 and the first purging permission flag $FH2PL$ is set at 0.

In a step S107, a determination is made as to whether the index $SUMGAS$ has fallen below zero. If so, it is determined that purging is complete and the process advances to a step S108, where both the first and second purging permission flags are set at zero, purging is prohibited, and processing ends.

According to the processing described above, determinations are made as to whether the currently accumulated amount of impurities is at a level at which purging is urgently required (SUMGAS > $SLGASH$), a level at which it is possible to wait until the heating medium passage is switched to the heat exchanger side ($SLGASH \geq SUMGAS >$ $SLGASL$), or whether purging is complete (0 > $SUMGAS$).

As shown in FIG. 18, first, in a step S111, the heating medium passage selection portion 30 determines whether the second purging permission flag $FH2PH$ is at 1 or not. If the second purging permission flag $FH2PH$ is at 1 (a state in which purging is required urgently), the three-way valve 17 is switched to the heat exchanger 6 side in a step S123 in order to perform purging, whereby the heating medium flows into the heat exchanger 6, and thus processing ends.

If the second purging permission flag $FH2PH$ is at 0, the process advances to a step S 112. In the step S 112, the temperature $TFC$ of the fuel cell 1 is read, and in a step S 113, a determination is made as to whether or not the fuel cell temperature $TFC$ is higher than the predetermined temperature $SLTFCL$. If not, the three-way valve 17 is switched to the heat exchanger 6 side in the step S 123 and the temperature of the fuel cell 1 is not cooled any further. If so, the three-way valve 17 is set to the radiator 18 side in a step S114, whereby the heating medium is cooled.

In a step S 115, a determination is made as to whether or not the first purging permission flag $FH2PL$ is at 1. If the flag $FH2PL$ is at 1, the process advances to a step S 119, and if at 0, the process advances to a step S 116. The processing in steps S 116 through S122 is identical to the processing of the steps S85 through S89 in FIG. 16 of the fifth embodiment, and hence description thereof has been omitted.

According to the processing described above, when purging is required urgently and when the temperature of the fuel cell 1 is lower than the predetermined temperature $SLTFCL$, the three-way valve 17 is opened to the heat exchanger 6 side to prevent the temperature of the fuel cell 1 from falling any further. In all other cases, cooling is performed actively by controlling the rotation speed of the pump 16 and/or by causing the fan 19 to rotate.

As shown in FIG. 19, first, in a step S131, the hydrogen purging control portion 32 determines whether or not the second purging permission flag $FH2PH$ is at 1. If the flag $FH2PH$ is at 1, the process advances to a step S 134 in order to implement hydrogen purging urgently. In the step S 134 the purging valve 13 is opened, and in a step S135 the hydrogen purging duration *TM* is counted up, whereupon processing ends.

If, on the other hand, the second purging permission flag *FH2PH* is at 0 in the step S131, the process advances to a step S132. In the step S132, a determination is made as to whether or not the first purging permission flag *FH2PL* is at 1. If the flag *FH2PL* is not at 1, purging has not been requested, and hence the process advances to a step S136, where the hydrogen purging duration *TM* is reset. In a step S 137, the purging valve 13 is closed and thus processing ends.

If *FH2PL* is at 1 in the step S132, the process advances to a step S 133. In the step S133, a determination is made as to whether or not the three-way valve 17 is set to the radiator 18 side, or in other words the heat exchanger bypass passage 22 side. If the three-way valve 17 is set to the radiator 18 side, the purging valve 13 is closed in a step S137 in order to postpone purging implementation timing, whereupon processing ends. If, on the other hand, the three-way valve 17 is set to the heat exchanger 6 side, then purging is possible, and thus the purging valve 13 is opened in the step S134. In the step S135 the hydrogen purging duration *TM* is counted up, whereupon processing ends.

According to the processing described above, when purging is required urgently, even when the temperature of the fuel cell 1 is higher than the predetermined temperature *SLTFCL,* purging can be executed by causing the heating medium to flow to the heat exchanger 6 side. When purging is required but normal operations may still be performed without performing purging urgently, purging is prohibited such that cooling of the fuel cell 1 can be given priority. Thus boiling of the heating medium, increased pressure in the heating medium passage, and alteration of the heating medium due to thermal decomposition can be avoided while maintaining an optimum balance between purging and temperature management of the fuel cell 1.

As well as the amount of accumulated impurities, purging urgency may also be forecast from voltage decreases in the cell constituting the fuel cell 1, the operating time of the fuel cell 1, the operating load of the fuel cell 1, or the duration of purging in the fuel cell 1, and hence purging urgency may be determined on the basis of any one or a combination of these factors.

In the sixth embodiment, the effects described below are obtained in addition to the effect (iii) in the third embodiment, the effect (iv) in the fourth embodiment, and the effects (vi) and (vii) in the fifth embodiment.

(viii) If the heating medium is flowing on the heat exchanger bypass passage 22 (radiator 18) side when hydrogen purging is requested, a selection is made according to the urgency of purging to either switch the heating medium passage to the heat exchanger 6 side and perform hydrogen purging, or to prohibit purging. Hence boiling of the heating medium, increased pressure in the heating medium passage, and alteration of the heating medium can be avoided while balancing demands for hydrogen purging and demands for fuel cell cooling.

(ix) When the urgency level of the requested hydrogen purging is high, the heating medium passage is switched to the heat exchanger 6 side and hydrogen purging is performed, and hence hydrogen purging can be executed without long delays from optimum hydrogen purging timing.

(x) If the urgency level of hydrogen purging falls during the execution of hydrogen purging, the heating medium passage is switched to the heat exchanger bypass passage 22 (radiator 18) side and hydrogen purging is prohibited. Hence when there is no urgent need to perform hydrogen purging, priority can be given to cooling the fuel cell 1.

(xi) When the urgency level of hydrogen purging is low, purging is prohibited and priority can be given to requests for cooling of the fuel cell 1.

(xii) The radiator 18 is provided for cooling the heating medium in the heat exchanger bypass passage 22, and the pump 16 which transmits the heating medium that passes through the radiator 18 and the fan 19 which transmits cooling air to the radiator 18 are provided as mechanisms for adjusting the cooling ability of the radiator 18. Hence, when the level of urgency of the requested hydrogen purging is low, hydrogen purging is prohibited, whereupon the pump 16 and fan 19 are used to raise the cooling ability of the radiator 18 such that the heating medium is cooled below a predetermined temperature. The heating medium passage is then switched to the heat exchanger 6 side and hydrogen purging is permitted. In so doing, requests for hydrogen purging can be satisfied while sufficiently satisfying requests for cooling of the fuel cell 1.

(xiii) The purging urgency is determined on the basis of the amount of accumulated impurities, the cell voltage of the fuel cell 1, the operating time of the fuel cell 1, the operating load of the fuel cell 1, or the duration of purging in the fuel cell 1, and thus the purging urgency can be understood accurately.

Although the invention has been described above by reference to certain embodiments of the invention, the invention is not limited to the embodiments described above. Modifications and variations of the embodiments described above will occur to those skilled in the art in the light of the above teachings. The scope of the invention is defined with reference to the following claims.

INDUSTRIAL APPLICABILITY

This invention can be applied widely to fuel cells in which gas is recirculated. In cases where discharged recirculated gas is processed by combustion, this invention is useful in preventing increased pressure in a heating medium passage and alteration of the heating medium, which are caused by boiling of the heating medium.

**Claims**

1. A method of operating a fuel cell system, comprising:

    - generating electrical power by causing hydrogen and oxygen to react in a fuel cell (1);
    - supplying hydrogen to the fuel cell (1) by a hydrogen supplying device (2);
    - adjusting a temperature of the fuel cell (1) by causing a heating medium to flow into the fuel cell (1) by a temperature adjustment mechanism (4);
    - generating high-temperature combustion gas by burning hydrogen in a burner (5);
    - warming the fuel cell (1) by a heat exchanger (6) during a cold start-up operation by providing the heating medium with the heat of the combustion gas such that the heating medium is heated; and
    - causing gas inside the recirculation path (11) of the hydrogen supplying device (2) to flow into the burner (5) by a hydrogen purging mechanism (13), said gas is discharged from the fuel cell (1);
    - wherein, when hydrogen purging is executed by the hydrogen purging mechanism (13) the combustion gas generated by the burner (5) is selectively discharged toward either a site at which the heating medium flows without stopping or a site at which the heating medium is not present.

2. The method as defined in Claim 1, further comprising discharging the combustion gas by a heat exchanger bypass mechanism (21) without causing the combustion gas to flow through the heat exchanger (6),

    - wherein, when hydrogen purging is executed by the hydrogen purging mechanism (13), the combustion gas is discharged by the heat exchanger bypass mechanism (21) so as to bypass the heat exchanger (6).

3. The method as defined in Claim 1, further comprising:

    - bypassing the heat exchanger (6) by the heating medium via a heat exchanger bypass passage (22); and
    - switching the heating medium passage between the heat exchanger (6) side and the heat exchanger bypass passage (22) side via a heating medium passage switching mechanism (17);
    - wherein, if the heating medium passage switching mechanism (17) has set the heating medium passage to the heat exchanger bypass passage (22) side when hydrogen purging is to be executed by the hydrogen purging mechanism (13), a predetermined amount of the heating medium is caused to flow to the heat exchanger (6) side by the heating medium passage switching mechanism (17).

4. The method as defined in Claim 1, further comprising:

    - bypassing the heat exchanger (6) by the heating medium via a heat exchanger bypass passage (22); and
    - switching the heating medium passage between the heat exchanger (6) side and the heat exchanger bypass passage (22) side via a heating medium passage switching mechanism (17);
    - wherein, if the heating medium passage has been set to the heat exchanger bypass passage (22) side by the heating medium passage switching mechanism (17) when hydrogen purging is to be executed by the hydrogen purging mechanism (13), hydrogen purging is executed after the heating medium passage is switched to the heat exchanger (6) side by the heating medium passage switching mechanism (17).

5. The method as defined in Claim 4, wherein, if the heating medium passage has been set to the heat exchanger bypass passage (22) side by the heating medium passage switching mechanism (17) when hydrogen purging is to be executed by the hydrogen purging mechanism (13), hydrogen purging is prohibited until the heating medium flows to the heat exchanger (6) side.

6. The method as defined in Claim 5, further comprising:

    - cooling the heating medium in the heat exchanger bypass passage (22) by a cooling mechanism (18); and
    - adjusting the cooling ability of the cooling mechanism (18) by a cooling ability adjustment mechanism (16, 19),
    - wherein, if the heating medium passage has been set to the heat exchanger bypass passage (22) side by the heating medium passage switching mechanism (17) when hydrogen purging is to be executed by the hydrogen purging mechanism (13), the cooling ability of the cooling mechanism (18) is raised by the cooling ability adjustment mechanism (16, 19) such that the heating medium is rapidly cooled below a predetermined temperature, whereupon the heating medium passage is switched to the heat exchanger (6) side by the heating medium passage switching mechanism (17) and hydrogen purging is performed by the hydrogen purging mechanism (13).

7.  The method as defined in Claim 5, wherein, if the heating medium passage has been set to the heat exchanger bypass passage (22) side by the heating medium passage switching mechanism (17) when hydrogen purging is to be executed by the hydrogen purging mechanism (13), a selection is made according to the urgency of hydrogen purging to either switch the heating medium passage to the heat exchanger (6) side and then perform hydrogen purging, or to prohibit purging.

8.  The method as defined in Claim 7, wherein, if hydrogen purging is required urgently, the heating medium passage is switched to the heat exchanger (6) side by the heating medium passage switching mechanism (17) and hydrogen purging is performed.

9.  The method as defined in Claim 8, wherein, if the need to perform hydrogen purging urgently disappears during hydrogen purging, the heating medium passage is switched to the heat exchanger bypass passage (22) side by the heating medium passage switching mechanism (17) and hydrogen purging is prohibited.

10. The method as defined in Claim 7, wherein purging is prohibited when there is no need to perform hydrogen purging urgently.

11. The method as defined in Claim 7, further comprising:

    - cooling the heating medium in the heat exchanger bypass passage (22) by a cooling mechanism (18); and
    - adjusting the cooling ability of the cooling mechanism (18) by a cooling ability adjustment mechanism (16, 19),
    - wherein hydrogen purging is prohibited when there is no need to perform hydrogen purging urgently,
    - after which the cooling ability of the cooling mechanism (18) is raised by the cooling ability adjustment mechanism (16, 19) such that the heating medium temperature is cooled rapidly below a predetermined temperature, the heating medium passage is switched to the heat exchanger (6) side by the heating medium passage switching mechanism (17), and hydrogen purging is then permitted.

12. The method as defined in any one of Claim 7 through Claim 11, wherein a determination is made as to whether or not hydrogen purging is required urgently on the basis of a cell voltage of the fuel cell (1).

13. The method as defined in any one of Claim 7 through Claim 11, wherein a determination is made as to whether or not hydrogen purging is required urgently on the basis of an operating time of the fuel cell (1).

14. The method as defined in any one of Claim 7 through Claim 11, wherein a determination is made as to whether or not hydrogen purging is required urgently on the basis of an operating load of the fuel cell (1).

15. The method as defined in any one of Claim 7 through Claim 11, wherein a determination is made as to whether or not hydrogen purging is required urgently on the basis of a duration of hydrogen purging in the fuel cell (1).

16. The method as defined in Claim 6 or Claim 11, wherein the cooling mechanism (18) is a radiator, and the cooling ability adjustment mechanism is a pump (16) which increases the flow of heating medium passing through the radiator (18).

17. The method as defined in Claim 6 or Claim 11, wherein the cooling mechanism (18) is a radiator, and the cooling ability adjustment mechanism is a fan (19) which increases the amount of air passing through the radiator (18).


**Patentansprüche**

1.  Verfahren zum Betrieb eines Brennstoffzellensystems, das umfasst:

    - Erzeugen von elektrischer Energie, indem bewirkt wird, dass Wasserstoff und Sauerstoff in einer Brennstoffzelle (1) reagieren;

- Zuführen von Wasserstoff zur Brennstoffzelle (1) durch eine Wasserstoff-Zuführungsvorrichtung (2);
- Einstellen einer Temperatur der Brennstoffzelle (1) durch einen Temperatur-Einstellmechanismus (4), indem bewirkt wird, dass ein Wärmemedium in die Brennstoffzelle (1) strömt;
- Erzeugen eines Hochtemperatur-Verbrennungsgases durch Verbrennen von Wasserstoff in einem Brenner (5);
- Erwärmen der Brennstoffzelle (1) während einem kalten Startvorgang durch einen Wärmetauscher (6) durch Versorgen des Wärmemediums mit der Wärme des Verbrennungsgases, sodass das Wärmemedium erwärmt wird; und
- Bewirken durch einen Wasserstoff-Spülmechanismus (13), dass das Gas im Inneren des Rückführungsweges (11) der Wasserstoff-Zuführungsvorrichtung (2) in den Brenner (5) strömt, wobei das Gas aus der Brennstoffzelle (1) abgelassen wird;
- wobei, wenn die Wasserstoffspülung durch den Wasserstoff-Spülmechanismus durchgeführt wird, das vom Brenner (5) erzeugte Verbrennungsgas selektiv entweder zu einer Seite, an der das Wärmemedium ohne anzuhalten strömt, oder zu einer Seite abgelassen wird, an der das Wärmemedium nicht vorhanden ist.

2. Verfahren nach Anspruch 1, das ferner das Ablassen des Verbrennungsgases durch einen Wärmetauscher-Bypassmechanismus (21) aufweist, ohne dass bewirkt wird, dass das Verbrennungsgas durch den Wärmetauscher (6) strömt,

   - wobei, wenn die Wasserstoffspülung vom Wasserstoff-Spülmechanismus (13) durchgeführt wird, das Verbrennungsgas durch den Wärmetauscher-Bypassmechanismus (21) abgelassen wird, um den Wärmetauscher (6) zu umgehen.

3. Verfahren nach Anspruch 1, das ferner umfasst:

   - Umgehen des Wärmetauschers (6) durch das Wärmemedium über einen Wärmetauscher-Bypassdurchgang (22); und
   - Umschalten des Wärmemediumdurchgangs zwischen der Seite des Wärmetauschers (6) und der Seite des Wärmetauscher-Bypassdurchgangs (22) durch einen Wärmemediumdurchgang-Umschaltmechanismus (17);
   - wobei, wenn der Wärmemediumdurchgang-Umschaltmechanismus (17) den Wärmemediumdurchgang zur Seite des Wärmetauscher-Bypassdurchgangs (22) eingestellt hat, wenn die Wasserstoffspülung vom Wasserstoff-Spülmechanismus (13) ausgeführt wird, durch den Wärmemediumdurchgang-Umschaltmechanismus (17) bewirkt wird, dass eine vorgegebene Menge des Wärmemediums zur Seite des Wärmetauschers (6) strömt.

4. Verfahren nach Anspruch 1, das ferner umfasst:

   - Umgehen des Wärmetauschers (6) durch das Wärmemedium über einen Wärmetauscher-Bypassdurchgang (22); und
   - Umschalten des Wärmemediumdurchgangs zwischen der Seite des Wärmetauschers (6) und der Seite des Wärmetauscher-Bypassdurchgangs (22) durch einen Wärmemediumdurchgang-Umschaltmechanismus (17);
   - wobei, wenn der Wärmemediumdurchgang vom Wärmemediumdurchgang-Umschaltmechanismus (17) zur Seite des Wärmetauscher-Bypassdurchgangs (22) eingestellt wurde, wenn die Wasserstoffspülung vom Wasserstoff-Spülmechanismus (13) ausgeführt wird, die Wasserstoffspülung durchgeführt wird, nachdem der Wärmemediumdurchgang vom Wärmemediumdurchgang-Umschaltmechanismus (17) zur Seite des Wärmetauscher-Bypassdurchgangs (22) umgeschaltet wurde.

5. Verfahren nach Anspruch 4, wobei, wenn der Wärmemediumdurchgang vom Wärmemediumdurchgang-Umschaltmechanismus (17) zur Seite des Wärmetauscher-Bypassdurchgangs (22) eingestellt wurde, wenn die Wasserstoffspülung vom Wasserstoff-Spülmechanismus (13) ausgeführt wird, die Wasserstoffspülung verhindert wird, bis das Wärmemedium zur Seite des Wärmetauschers (6) strömt.

6. Verfahren nach Anspruch 5, das ferner umfasst:

   - Kühlen des Wärmemediums im Wärmetauscher-Bypassdurchgang (22) durch einen Kühlmechanismus (18); und
   - Einstellen der Kühlfähigkeit des Kühlmechanismus (18) durch einen Kühlfähigkeit-Einstellmechanismus (16, 19),
   - wobei, wenn der Wärmemediumdurchgang durch den Wärmemediumdurchgang-Umschaltmechanismus (17) zur Seite des Wärmetauscher-Bypassdurchgangs (22) eingestellt wurde, wenn die Wasserstoffspülung vom Wasserstoff-Spülmechanismus (13) ausgeführt wird, die Kühlfähigkeit des Kühlmechanismus (18) vom Kühlfähigkeit-Einstellmechanismus (16, 19) angehoben wird, sodass das Wärmemedium rasch unter eine vorgegebene Temperatur abgekühlt wird, woraufhin der Wärmemediumdurchgang durch den Wärmemediumdurchgang-Umschaltmechanismus (17) zur Seite des Wärmetauschers (6) umgeschaltet wird und die Wasserstoffspülung durch den Wasserstoff-Spülmechanismus (13) ausgeführt wird.

7. Verfahren nach Anspruch 5, wobei, wenn der Wärmemediumdurchgang vom Wärmemediumdurchgang-Umschaltmechanismus 17 zur Seite des Wärmetauscher-Bypassdurchgangs (22) eingestellt wurde, wenn die Wasserstoffspülung vom Wasserstoff-Spülmechanismus (13) ausgeführt wird, eine Auswahl nach der Dringlichkeit der Wasserstoffspülung erfolgt, um entweder den Wärmemediumdurchgang zur Seite des Wärmetauschers (6) umzuschalten und dann die Wasserstoffspülung auszuführen, oder die Spülung zu verhindern.

8. Verfahren nach Anspruch 7, wobei, wenn die Wasserstoffspülung dringend erforderlich ist, der Wärmemediumdurchgang durch den Wärmemediumdurchgang-Umschaltmechanismus (17) zur Seite des Wärmetauschers (6) umgeschaltet und der Wasserstoff-Spülvorgang durchgeführt wird.

9. Verfahren nach Anspruch 8, wobei, wenn der Bedarf einer dringenden Durchführung der Wasserstoffspülung während der Wasserstoffspülung aufhört, der Wärmemediumdurchgang vom Wärmemediumdurchgang-Umschaltmechanismus (17) zur Seite des Wärmetauscher-Bypassdurchgangs (22) umgeschaltet und die Wasserstoffspülung verhindert wird.

10. Verfahren nach Anspruch 7, wobei die Spülung verhindert wird, wenn kein Bedarf besteht, die Wasserstoffspülung dringend auszuführen.

11. Verfahren nach Anspruch 7, das ferner umfasst:

   - Kühlen des Wärmemediums im Wärmetauscher-Bypassdurchgang (22) durch einen Kühlmechanismus (18); und
   - Einstellen der Kühlfähigkeit des Kühlmechanismus (18) durch einen Kühlfähigkeit-Einstellmechanismus (16, 19),
   - wobei die Wasserstoffspülung verhindert wird, wenn kein Bedarf besteht, die Wasserstoffspülung dringend auszuführen,
   - nachdem die Kühlfähigkeit des Kühlmechanismus (18) vom Kühlfähigkeit-Einstellmechanismus (16, 19) angehoben wurde, sodass die Wärmemediumtemperatur rasch unter eine vorgegebene Temperatur abgekühlt wird, der Wärmemediumdurchgang durch den Wärmemediumdurchgang-Umschaltmechanismus (17) zur Seite des Wärmetauschers (6) umgeschaltet und danach der Wasserstoff-Spülvorgang zugelassen wurde.

12. Verfahren nach einem der Ansprüche 7 bis 11, wobei eine Ermittlung auf der Basis einer Zellspannung der Brennstoffzelle (1) darüber durchgeführt wird, ob die Wasserstoffspülung dringend erforderlich ist, oder nicht.

13. Verfahren nach einem der Ansprüche 7 bis 11, wobei auf der Basis einer Betriebsdauer der Brennstoffzelle (1) eine Ermittlung darüber durchgeführt wird, ob die Wasserstoffspülung dringend erforderlich ist, oder nicht.

14. Verfahren nach einem der Ansprüche 7 bis 11, wobei auf der Basis einer Betriebslast der Brennstoffzelle (1) eine Ermittlung darüber durchgeführt wird, ob die Wasserstoffspülung dringend erforderlich ist, oder nicht.

15. Verfahren nach einem der Ansprüche 7 bis 11, wobei auf der Basis einer Dauer der Wasserstoffspülung in der Brennstoffzelle (1) eine Ermittlung darüber durchgeführt wird, ob die Wasserstoffspülung dringend erforderlich ist, oder nicht.

16. Verfahren nach Anspruch 6 oder Anspruch 11, wobei der Kühlmechanismus (18) ein Kühler und der Kühlfähigkeit-Einstellmechanismus eine Pumpe (16) ist, die die Strömung des durch den Kühler (18) strömenden Wärmemediums erhöht.

17. Verfahren nach Anspruch 6 oder 11, wobei der Kühlmechanismus ein Kühler und der Kühlfähigkeit-Einstellmechanismus ein Lüfter (19) ist, der die Menge der durch den Kühler (18) strömenden Luft erhöht.

**Revendications**

1. Procédé pour faire fonctionner un système de pile à combustible, comprenant les étapes consistant à :

   engendrer une puissance électrique en faisant réagir de l'hydrogène et de l'oxygène dans une pile (1) à combustible ;
   fournir de l'hydrogène à la pile (1) à combustible, au moyen d'un dispositif (2) d'alimentation en hydrogène ;
   régler une température de la pile (1) à combustible, en faisant s'écouler un milieu chauffant dans la pile (1) à combustible, au moyen d'un mécanisme (4) de réglage de température ;
   engendrer un gaz de combustion à haute température, en brûlant de l'hydrogène dans un brûleur (5) ;
   réchauffer la pile (1) à combustible au moyen d'un échangeur (6) de chaleur, au cours d'une opération de démarrage à froid, en fournissant la chaleur du gaz de combustion au milieu chauffant, de manière à chauffer le milieu chauffant ; et
   faire en sorte que le gaz à l'intérieur du trajet (11) de recirculation du dispositif (2) d'alimentation en hydrogène, s'écoule dans le brûleur (5), au moyen d'un mécanisme (13) de purge d'hydrogène, ledit gaz étant évacué de la pile (1) à combustible ;

   dans lequel, lorsque la purge d'hydrogène est exécutée par le mécanisme (13) de purge d'hydrogène, le gaz de combustion engendré par le brûleur (5) est déchargé de manière sélective soit vers un site où le milieu chauffant s'écoule sans s'arrêter soit vers un site où le milieu chauffant n'est pas présent.

2. Procédé selon la revendication 1, comprenant en outre, le fait de décharger le gaz de combustion à l'aide d'un mécanisme (21) de dérivation de l'échangeur de chaleur, sans faire en sorte que le gaz de combustion s'écoule à travers l'échangeur (6) de chaleur,
   dans lequel, lorsque la purge d'hydrogène est exécutée par le mécanisme (13) de purge d'hydrogène, le gaz de combustion est déchargé par le mécanisme (21) de dérivation de l'échangeur de chaleur, de manière à mettre en dérivation l'échangeur (6) de chaleur.

3. Procédé selon la revendication 1, comprenant en outre, les étapes consistant à :

   mettre en dérivation l'échangeur (6) de chaleur, au moyen du milieu chauffant, via un passage (22) de dérivation de l'échangeur de chaleur ; et
   commuter le passage de milieu chauffant entre le côté échangeur (6) de chaleur et le côté passage (22) de dérivation de l'échangeur de chaleur, par le biais d'un mécanisme (17) de commutation du passage de milieu chauffant ;

   dans lequel, si le mécanisme (17) de commutation du passage de milieu chauffant a réglé le passage de milieu chauffant sur le côté passage (22) de dérivation de l'échangeur de chaleur, lorsque la purge d'hydrogène doit être exécutée par le mécanisme (13) de purge d'hydrogène, il est fait en sorte qu'une quantité prédéterminée du milieu chauffant s'écoule vers le côté échangeur (6) de chaleur, par le mécanisme (17) de commutation du passage de milieu chauffant.

4. Procédé selon la revendication 1, comprenant en outre, les étapes consistant à :

   mettre en dérivation l'échangeur (6) de chaleur, au moyen du milieu chauffant, via un passage (22) de dérivation de l'échangeur de chaleur ; et
   commuter le passage de milieu chauffant entre le côté échangeur (6) de chaleur et le côté passage (22) de dérivation de l'échangeur de chaleur, par le biais d'un mécanisme (17) de commutation du passage de milieu chauffant ;

   dans lequel, si le passage de milieu chauffant a été réglé vers le côté passage (22) de dérivation de l'échangeur de chaleur par le mécanisme (17) de commutation du passage de milieu chauffant, lorsque la purge d'hydrogène doit être exécutée par le mécanisme (13) de purge d'hydrogène, la purge d'hydrogène est exécutée après que le passage de milieu chauffant a été commuté sur le côté échangeur (6) de chaleur par le mécanisme (17) de commutation du passage de milieu chauffant.

5. Procédé selon la revendication 4, dans lequel, si le passage de milieu chauffant a été réglé vers le côté passage (22) de dérivation de l'échangeur de chaleur par le mécanisme (17) de commutation du passage de milieu chauffant, lorsque la purge d'hydrogène doit être exécutée par le mécanisme (13) de purge d'hydrogène, la purge d'hydrogène est interdite jusqu'à ce que le milieu chauffant s'écoule vers le côté échangeur (6) de chaleur.

6. Procédé selon la revendication 5, comprenant en outre, les étapes consistant à :

refroidir le milieu chauffant dans le passage (22) de dérivation de l'échangeur de chaleur, au moyen d'un mécanisme (18) de refroidissement ; et
régler la capacité de refroidissement du mécanisme (18) de refroidissement, au moyen d'un mécanisme (16, 19) de réglage de la capacité de refroidissement,

dans lequel, si le passage de milieu chauffant a été réglé vers le côté passage (22) de dérivation de l'échangeur de chaleur par le mécanisme (17) de commutation du passage de milieu chauffant, lorsque la purge d'hydrogène doit être exécutée par le mécanisme (13) de purge d'hydrogène, la capacité de refroidissement du mécanisme (18) de refroidissement est élevée par le mécanisme (16, 19) de réglage de la capacité de refroidissement, de sorte que le milieu chauffant est refroidi rapidement en deçà d'une température prédéterminée, après quoi le passage de milieu chauffant est commuté sur le côté échangeur (6) de chaleur par le mécanisme (17) de commutation du passage de milieu chauffant et la purge d'hydrogène est effectuée par le mécanisme (13) de purge d'hydrogène.

7. Procédé selon la revendication 5, dans lequel, si le passage de milieu chauffant a été réglé vers le côté passage (22) de dérivation de l'échangeur de chaleur par le mécanisme (17) de commutation du passage de milieu chauffant, lorsque la purge d'hydrogène doit être exécutée par le mécanisme (13) de purge d'hydrogène, un choix est opéré en fonction de l'urgence de la purge d'hydrogène, entre soit commuter le passage de milieu chauffant sur le côté échangeur (6) de chaleur et effectuer ensuite la purge d'hydrogène, soit interdire la purge.

8. Procédé selon la revendication 7, dans lequel si la purge d'hydrogène est requise d'urgence, le passage de milieu chauffant est commuté sur le côté échangeur (6) de chaleur par le mécanisme (17) de commutation du passage de milieu chauffant et la purge d'hydrogène est effectuée.

9. Procédé selon la revendication 8, dans lequel si la nécessité d'effectuer la purge d'hydrogène d'urgence disparaît au cours de la purge d'hydrogène, le passage de milieu chauffant est commuté sur le côté passage (22) de dérivation de l'échangeur de chaleur par le mécanisme (17) de commutation du passage de milieu chauffant et la purge d'hydrogène est interdite.

10. Procédé selon la revendication 7, dans lequel la purge est interdite lorsqu'il n'est pas nécessaire d'effectuer la purge d'hydrogène d'urgence.

11. Procédé selon la revendication 7, comprenant en outre, les étapes consistant à :

refroidir le milieu chauffant dans le passage (22) de dérivation de l'échangeur de chaleur, au moyen d'un mécanisme (18) de refroidissement ; et
régler la capacité de refroidissement du mécanisme (18) de refroidissement, au moyen d'un mécanisme (16, 19) de réglage de la capacité de refroidissement,

dans lequel la purge d'hydrogène est interdite lorsqu'il n'est pas nécessaire d'effectuer la purge d'hydrogène d'urgence,
après quoi, la capacité de refroidissement du mécanisme (18) de refroidissement est élevée par le mécanisme (16, 19) de réglage de la capacité de refroidissement, de manière à ce que la température du milieu chauffant chute rapidement en deçà d'une température prédéterminée, le passage de milieu chauffant est commuté sur le côté échangeur (6) de chaleur par le mécanisme (17) de commutation du passage de milieu chauffant et la purge d'hydrogène est ensuite autorisée.

12. Procédé selon l'une quelconque des revendications 7 à 11, dans lequel il est procédé à une détermination quant au fait que la purge d'hydrogène est requise d'urgence ou non, sur la base d'une tension de pile de la pile (1) à combustible.

13. Procédé selon l'une quelconque des revendications 7 à 11, dans lequel il est procédé à une détermination quant au fait que la purge d'hydrogène est requise d'urgence ou non, sur la base d'un temps de fonctionnement de la pile (1) à combustible.

**14.** Procédé selon l'une quelconque des revendications 7 à 11, dans lequel il est procédé à une détermination quant au fait que la purge d'hydrogène est requise d'urgence ou non, sur la base d'une charge de fonctionnement de la pile (1) à combustible.

**15.** Procédé selon l'une quelconque des revendications 7 à 11, dans lequel il est procédé à une détermination quant au fait que la purge d'hydrogène est requise d'urgence ou non, sur la base d'une durée de purge d'hydrogène dans la pile (1) à combustible.

**16.** Procédé selon la revendication 6 ou 11, dans lequel le mécanisme (18) de refroidissement est un radiateur et le mécanisme de réglage de la capacité de refroidissement est une pompe (16) qui accroît le flux du milieu chauffant passant à travers le radiateur (18).

**17.** Procédé selon la revendication 6 ou 11, dans lequel le mécanisme (18) de refroidissement est un radiateur et le mécanisme de réglage de la capacité de refroidissement est un ventilateur (19) qui accroît la quantité d'air passant à travers le radiateur (18).

FIG. 1

26

HEATING OPERATION
CONTROL PORTION

25

HEATING OPERATION
EXECUTION
DETERMINATION
PORTION

## FIG. 2

START

S11

READ TFC

S12

TFC > SLTFC ?

YES

NO

S14

S13

FCOLD = 1

FCOLD = 0

END

**FIG. 3**

START

S21

FCOLD = 1 ? — NO

YES

S22

| | |
|---|---|
| PURGING VALVE: | OPEN |
| PRESSURE REGULATING VALVE: | OPEN |
| COMPRESSOR: | ON |
| THREE-WAY VALVE: | HEAT EXCHANGER SIDE |
| PUMP: | ON |

S23

SWITCH EXHAUST THREE-WAY VALVE TO HEAT EXCHANGER SIDE POSITION

S24

SWITCH EXHAUST THREE-WAY VALVE TO OUTSIDE AIR SIDE POSITION

END

*FIG. 4*

**FIG. 5**

28

HYDROGEN PURGING
DETERMINATION
PORTION

29

HYDROGEN
PURGING CONTROL
PORTION

*FIG. 6*

START

S31 — FH2P = 1 ? — YES

NO

S32 — SUMGAS > SLGAS ? — YES

NO

S33 — READ W

S34 — SUMGAS = W x k + SUMGAS

S35 — SUMGAS = 0 / FH2P = 1

END

*FIG. 7*

**FIG. 8**

FIG. 9

31

HYDROGEN PURGING
CONTROL PORTION

30

HEAT MEDIUM
PASSAGE
SELECTION PORTION

28

HYDROGEN PURGING
DETERMINATION
PORTION

FIG. 10

START

S51
FH2P = 1 ? ───── YES ───────────────┐
│ NO                                 │
│                                    │
S52                                  │
READ TFC                            │
│                                    │
│                                    │
S53                                  │
TFC < SLTFC ? ───── YES ──────────┐ │
│ NO                              │ │
│                                 │ │
S54                       S55     │ │
SET THREE-WAY VALVE TO    SET THREE-WAY VALVE TO
RADIATOR SIDE             HEAT EXCHANGER SIDE
│                                 │
│                                 │
└─────────────┬───────────────────┘
│
END

*FIG. 11*

START

S61
FH2P = 1 ?
NO

YES

S62
PURGING VALVE: OPEN

S63
TM = TM + T

S64
TM > SLTM ?
YES

NO

S65
FH2P = 0
TM = 0
PURGING VALVE: CLOSE

END

**FIG. 12**

HEATING MEDIUM
PASSAGE
SELECTION PORTION — 30

HYDROGEN
PURGING CONTROL
PORTION — 32

HYDROGEN PURGING
DETERMINATION
PORTION — 28

## FIG. 13

START

S71 — FH2P = 1 ? — NO

YES

S72 — IS THREE-WAY VALVE RADIATOR SIDE ? — YES

NO

S73 — PURGING VALVE: OPEN

S77 — PURGING VALVE: CLOSE

S74 — TM = TM + T

S75 — TM > SLTM ? — YES

NO

S76 — FH2P = 0
TM = 0
PURGING VALVE: CLOSE

END

FIG. 14

**FIG. 15**

**FIG. 16**

```
                         ┌─────────────┐
                         │    START    │
                         └─────────────┘
                                │
         S101                   ▼
              ┌───────────────────────────────────┐
              │            READ W,TM               │
              └───────────────────────────────────┘
                                │
         S102                   ▼
              ┌───────────────────────────────────┐
              │            SUMGAS =                │
              │      SUMGAS + W x k1 - TM x k2     │
              └───────────────────────────────────┘
                                │
         S103                   ▼
              ╱─────────────────────────╲   YES                  S104
             ⟨   SUMGAS > SLGASL ?       ⟩──────────┐    ┌──────────────────┐
              ╲─────────────────────────╱           └───▶│    FH2PL = 1     │
                         │ NO                             │    FH2PH = 0     │
                         │                                └──────────────────┘
                         │                                         │
                         │◀────────────────────────────────────────┘
         S105            ▼
              ╱─────────────────────────╲   YES                  S106
             ⟨   SUMGAS > SLGASH ?       ⟩──────────┐    ┌──────────────────┐
              ╲─────────────────────────╱           └───▶│    FH2PL = 0     │
                         │ NO                             │    FH2PH = 1     │
                         │                                └──────────────────┘
                         │                                         │
                         │◀────────────────────────────────────────┘
         S107            ▼
              ╱─────────────────────────╲   YES                  S108
             ⟨      SUMGAS < 0 ?         ⟩──────────┐    ┌──────────────────┐
              ╲─────────────────────────╱           └───▶│    FH2PL = 0     │
                         │ NO                             │    FH2PH = 0     │
                         │                                │    SUMGAS = 0    │
                         │                                └──────────────────┘
                         │                                         │
                         │◀────────────────────────────────────────┘
                         ▼
                  ┌─────────────┐
                  │     END     │
                  └─────────────┘
```

**FIG. 17**

```
                    ┌──────────────┐
                    │    START     │
                    └──────┬───────┘
          S111            │
              ┌───────────▼───────────┐   YES
              │      FH2PH = 1 ?       ├──────────────────────────────┐
              └───────────┬───────────┘                              │
          S112          │ NO                                         │
              ┌───────────▼───────────┐                              │
              │       READ TFC        │                              │
              └───────────┬───────────┘                              │
          S113          │                                            │
              ┌───────────▼───────────┐   NO                         │
              │     TFC > SLTFCL ?     ├──────────────────────────┐  │
              └───────────┬───────────┘                           │  │
          S114          │ YES                    S123            │  │
              ┌───────────▼───────────┐         ┌────────────────▼──▼┐
              │ SET THREE-WAY VALVE   │         │   SET THREE-WAY     │
              │   TO RADIATOR SIDE    │         │   VALVE TO HEAT     │
              └───────────┬───────────┘         │  EXCHANGER SIDE     │
          S115          │                        └─────────┬──────────┘
              ┌───────────▼───────────┐   YES                │
              │      FH2PL = 1 ?       ├────────────┐         │
              └───────────┬───────────┘            │         │
          S116          │ NO                       │         │
              ┌───────────▼───────────┐   YES       │         │
              │     TFC > SLTFCH ?     ├──────┐      │         │
              └───────────┬───────────┘      │      │         │
          S117          │ NO       S118     │    S119        │
              ┌───────────▼──────┐  ┌─────────▼──┐ ┌──────────▼────────┐
              │   1st PUMP        │  │  2nd PUMP  │ │ 2nd PUMP ROTATION │
              │ ROTATION SPEED    │  │ ROTATION   │ │  SPEED, ROTATE    │
              │                   │  │  SPEED     │ │  RADIATOR FAN     │
              └───────┬───────────┘  └─────┬──────┘ └──────────┬────────┘
          S120        │◄───────────────────┘                   │
              ┌───────▼───────────┐                            │
              │     READ TLLC     │                            │
              └───────┬───────────┘                            │
          S121      │                                          │
              ┌───────▼───────────┐   YES                       │
              │   TLLC < SLTLLC ? ├─────────────────►───────────┤
              └───────┬───────────┘                            │
          S122      │ NO                                       │
              ┌───────▼───────────┐                            │
              │ ROTATE RADIATOR FAN│                           │
              └───────┬───────────┘                            │
                      │◄───────────────────────────────────────┘
                    ┌─▼────────────┐
                    │     END      │
                    └──────────────┘
```

## FIG. 18

**FIG. 19**